# FASCICULE DE BREVET EUROPEEN

(11) **EP 4 491 315 B1**
(45) Date de publication et mention de la délivrance du brevet: **11.02.2026**
(21) Numéro de dépôt: 24186588.0
(22) Date de dépôt: 04.07.2024
(51) Int. Cl.: B23K 20/12

(54) **INSTALLATION DE FABRICATION D'UN OBJET MANUFACTURÉ PAR FABRICATION ADDITIVE PAR FRICTION-MALAXAGE ET PROCÉDÉ DE FABRICATION ASSOCIÉ**
ANLAGE ZUR HERSTELLUNG EINES DURCH ADDITIVE FERTIGUNG HERGESTELLTEN OBJEKTS DURCH REIBRÜHRSCHWEISSEN UND ZUGEHÖRIGES HERSTELLUNGSVERFAHREN
FACILITY FOR MANUFACTURING A MANUFACTURED OBJECT BY ADDITIVE MANUFACTURING BY FRICTION STIR WELDING AND ASSOCIATED MANUFACTURING METHOD

(30) Priorité: 07.07.2023 FR 2307287
(43) Date de publication de la demande: 15.01.2025
(73) Titulaire: Dassault Aviation, 75008 Paris (FR)
(72) Inventeur: LE GALLIC, Joël, 64205 Biarritz Cedex (FR)
(74) Mandataire: Lavoix

(56) Documents cités:
- US-A1- 2023 146 110

## Description

La présente invention concerne une installation de fabrication d'un objet manufacturé par fabrication additive par friction-malaxage à partir d'un matériau de fabrication.

On connaît de l'état de la technique des installations comprenant un système de fabrication additive par friction-malaxage et un système d'alimentation du système de fabrication en matériau de fabrication.

Il est connu que le système d'alimentation comprenne un barillet ou un chargeur dans lequel est installé une pluralité de barreaux de matériau de fabrication de section droite carrée. Ces barreaux de matériau de fabrication sont déchargés les uns après les autres du barillet ou du chargeur pour alimenter le système de fabrication. Dans de telles installations, le barreau founi au système de fabrication est ensuite introduit dans un pion de malaxage pour être malaxé afin de fabriquer l'objet manufacturé.

Toutefois, l'utilisation de tels barillet ou chargeur présente plusieurs inconvénients.

Tout d'abord, la préparation des barreaux destinés à être chargés dans de tels barillet ou chargeur est longue et fastidieuse. En effet, chacun de ces barreaux doit présenter des dimensions précises complémentaire de dimensions d'une chambre du barillet ou du chargeur dans laquelle il est destiné à être inséré.

En outre, ces barillets ou chargeurs doivent être fréquemment rechargés en barreaux par un opérateur humain. Ceci complexifie la fabrication de l'objet et représente un risque pour l'opérateur.

Egalement, la section droite carrée des barreaux réduit l'homogénéité de l'ajout de matière ayant lieu lors de la fabrication additive par friction-malaxage en sortie du pion de malaxage, qui lui est généralement cylindrique ou tronconique. En effet, la perte de charge lors du fluage de la matière n'est alors pas uniforme, avant que cette dernière ne rejoigne la périphérie du pion.

La transition entre deux barreaux successifs lors de la fabrication présente un risque important d'introduction de défauts. Cette transition peut notamment entraîner un manque de matière lors de la fabrication, une non tenue d'un restant du barreau en cours de consommation lors du relevage du pion de malaxage ou une inhomogénéité de la fluidité de la matière ajoutée lors de la fabrication.

US 2023/146110 A1 divulgue un système de fabrication additive.

Un but de l'invention est alors de proposer une installation de fabrication qui soit simple, rapide et efficace, qui présente moins de risque pour un opérateur destiné à interagir avec elle et qui mène à la fabrication d'un objet de qualité supérieure.

A cet effet, l'invention a pour objet une installation de fabrication d'un objet manufacturé, selon la revendication 1.

Suivant d'autres aspects avantageux de l'invention, l'installation est selon l'une ou plusieurs des revendications 2 à 19.

Optionnellement, le mécanisme de guidage comprend un entonnoir de guidage comportant un passage tubulaire s'étendant sensiblement selon l'axe de rotation principal en regard de l'entrée du dispositif de guidage, le passage tubulaire étant destiné à canaliser le fil de matériau de fabrication déroulé de sorte que le fil tourne autour de sa fibre neutre en entrée du dispositif de guidage.

Suivant d'autres aspects avantageux de l'invention, l'installation comprend une ou plusieurs des caractéristiques suivantes, prises isolément ou suivant toutes les combinaisons techniquement possibles :
- le système de fabrication auxiliaire comprend :
   - au moins un moteur auxiliaire ;
   - un effecteur auxiliaire configuré pour être entraîné en rotation par l'au moins un moteur auxiliaire ;
   - un dispositif auxiliaire d'avancement du fil de matériau de fabrication déroulé de la bobine auxiliaire, configuré pour déplacer le fil de matériau de fabrication déroulé de la bobine auxiliaire vers le pion de malaxage auxiliaire ;
   le pion de malaxage auxiliaire étant configuré pour être entraîné en rotation par l'effecteur auxiliaire ;
- la bobine et la bobine auxiliaire sont montés sur le mécanisme de mise en rotation de sorte que la bobine et la bobine auxiliaire s'étendant dans un même plan, le mécanisme de mise en rotation étant configuré pour entraîner la bobine et la bobine auxiliaire conjointement en rotation autour d'un axe de rotation principal, l'axe de rotation principal s'étendant sensiblement tangentiellement par rapport à la circonférence externe de chacune de la bobine et de la bobine auxiliaire ;
- le fil de matériau de fabrication de la bobine est destiné à être acheminé vers le dispositif de guidage selon une direction générale, le fil de matériau de fabrication de la bobine auxiliaire étant destiné à être acheminé vers le dispositif de guidage auxiliaire selon une direction générale auxiliaire sensiblement opposée à la direction générale, la direction générale et la direction générale auxiliaire étant sensiblement parallèles à l'axe de rotation principal du mécanisme de mise en rotation ; et
- l'avancement du fil de matériau de fabrication déroulé par le dispositif d'avancement entraîne la rotation supplémentaire de la bobine autour de l'axe de bobine et le déroulement du fil de matériau de fabrication depuis la bobine, l'avancement du fil de matériau de fabrication déroulé par le dispositif d'avancement auxiliaire entraînant la rotation supplémentaire de la bobine auxiliaire autour de l'axe de bobine auxiliaire et le déroulement du fil de matériau de fabrication depuis la bobine auxiliaire.

L'invention a en outre pour objet un procédé de fabrication d'un objet manufacturé, selon la revendication 20.

L'invention apparaîtra plus clairement à la lecture de la description qui va suivre, donnée uniquement à titre d'exemple non limitatif, et faite en référence aux dessins dans lesquels :
[Fig 1] la figure 1 est une vue en perspective de dessus de l'installation de fabrication selon un premier mode de réalisation de l'invention ;
[Fig 2] la figure 2 est une vue de côté de l'installation de fabrication de la figure 1 ;
[Fig 3] la figure 3 est une vue en coupe selon un plan de coupe vertical du système d'alimentation de l'installation de fabrication des figures 1 et 2 ;
[Fig 4] la figure 4 est une vue en perspective de dessus d'une portion du dispositif de déroulement rotatif du système d'alimentation de la figure 3 ;
[Fig 5] la figure 5 est une vue en perspective de dessus de la portion du dispositif de déroulement rotatif de la figure 4, sur laquelle est disposée une bobine de fil de matériau de fabrication ;
[Fig 6] la figure 6 est une vue en coupe selon le plan de coupe VI-VI d'une partie de la portion du dispositif de déroulement rotatif de la figure 5 ;
[Fig 7] la figure 7 est une vue en perspective de dessus d'une portion du dispositif de déroulement rotatif du système d'alimentation de la figure 3, incluant notamment une partie des moyens de confinement de la bobine ;
[Fig 8] la figure 8 est une vue en coupe selon le plan de coupe VIII-VIII d'une partie de la portion du dispositif de déroulement rotatif illustré sur la figure 7 ;
[Fig 9] la figure 9 est une vue de côté d'une partie du mécanisme de guidage du fil de matériau de fabrication déroulé du dispositif de déroulement rotatif du système d'alimentation de la figure 3 ;
[Fig 10] la figure 10 est une vue agrandie d'un détail X de la figure 3 ;
[Fig 11] la figure 11 est une vue en perspective de dessus d'une partie du dispositif de déroulement rotatif du système d'alimentation de la figure 3 ;
[Fig 12] la figure 12 est une représentation schématique du procédé de fabrication selon l'invention ;
[Fig 13] la figure 13 est une représentation schématique simplifiée d'une portion d'une installation de fabrication selon un deuxième mode de réalisation de l'invention ; et
[Fig 14] la figure 14 est une représentation schématique simplifiée d'une portion d'une installation de fabrication selon un troisième mode de réalisation de l'invention.

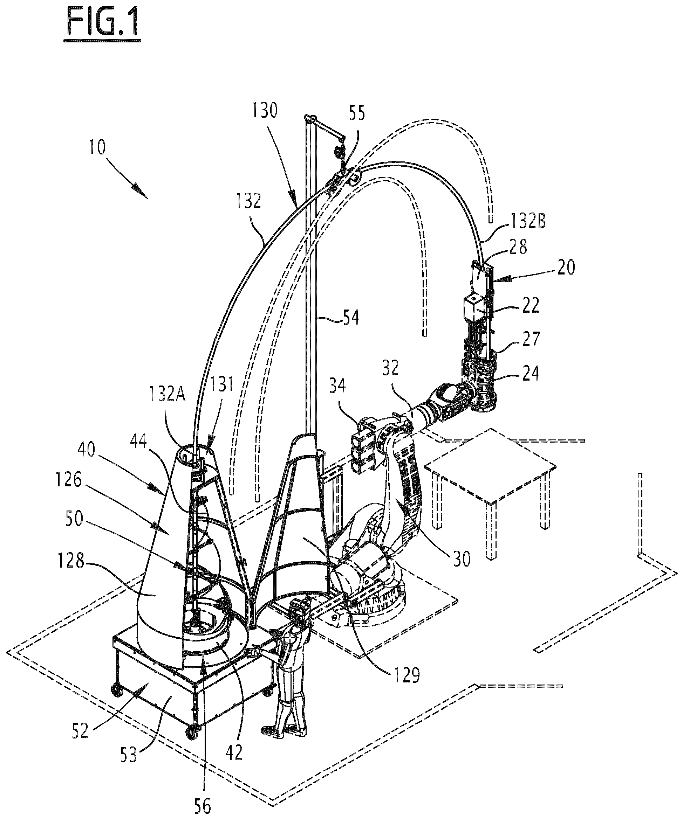

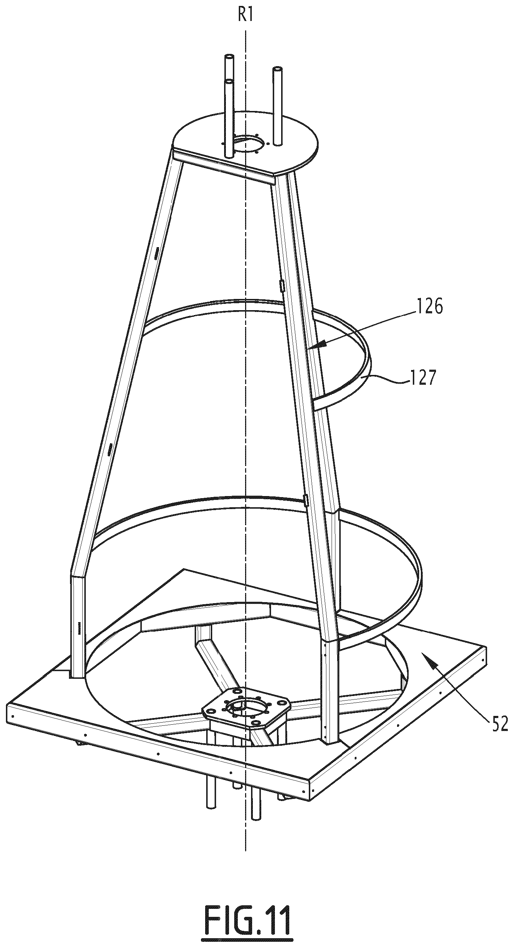

En référence aux Figures 1 à 11, on décrit une installation 10 de fabrication d'un objet manufacturé selon un premier mode de réalisation, en particulier par fabrication additive par friction-malaxage (en anglais « *additive friction stir deposition* ») à partir d'un matériau de fabrication.

L'installation 10 comprend un système de fabrication 20 et un système 40 d'alimentation du système de fabrication 20 en matériau de fabrication.

Le système de fabrication 20 est configuré pour fabriquer l'objet manufacturé par fabrication additive par friction-malaxage à partir du matériau de fabrication.

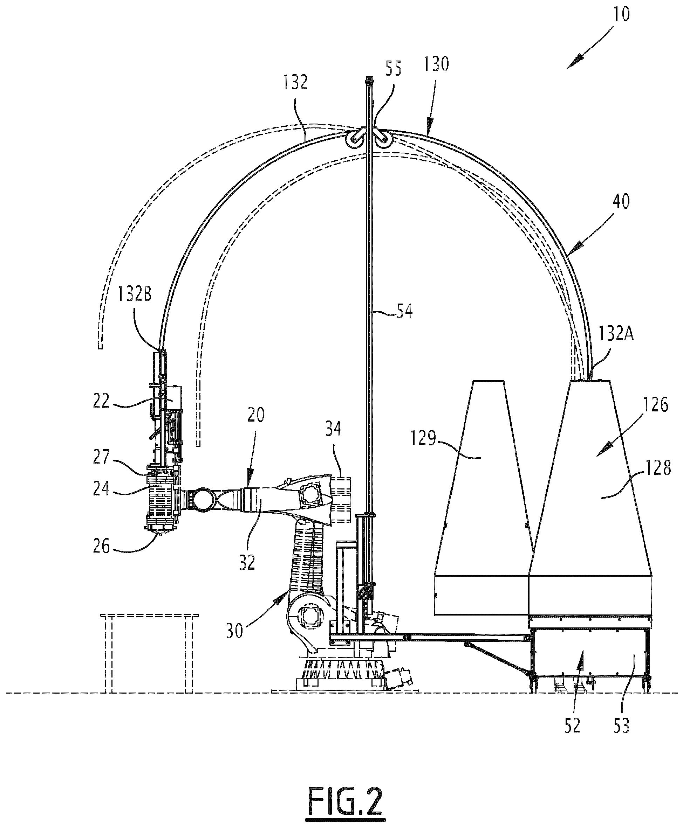

En référence aux figures 1 et 2, le système de fabrication 20 comprend par exemple au moins un moteur 22, un effecteur 24, un pion de malaxage 26 et un dispositif d'avancement 27.

Optionnellement, le système de fabrication 20 comprend en outre un redresseur 28.

Par exemple, comme illustré sur les figures 1 et 2, le système de fabrication 20 comprend en outre un robot 30 configuré pour manipuler l'ensemble comportant l'au moins un moteur 22, l'effecteur 24, le pion de malaxage 26, le dispositif d'avancement 27 et le cas échéant le redresseur 28.

L'effecteur 24 est configuré pour être entraîné en rotation par l'au moins un moteur 22.

Le pion de malaxage 26 est configuré pour être entraîné en rotation par l'effecteur 24.

Le pion de malaxage 26 est notamment destiné à malaxer un fil 44 de matériau de fabrication déroulé, fourni par le système d'alimentation 40 (décrit plus en détails plus bas), pour fabriquer l'objet manufacturé. En particulier, le malaxage du fil 44 de matériau de fabrication déroulé permet de rendre malléable le matériau de fabrication du fil afin d'ajouter cette matière malléable sur un substrat afin de fabriquer progressivement l'objet manufacturé.

Le dispositif d'avancement 27 est un dispositif d'avancement du fil 44 de matériau de fabrication déroulé. Le dispositif 27 est configuré pour déplacer le fil 44 de matériau de fabrication déroulé vers le pion de malaxage 26. Le fil 44 de matériau de fabrication déroulé est continu de sorte que le matériau de fabrication est fourni de manière continue au pion de malaxage 26, notamment par le dispositif d'avancement 27, au fur et à mesure que le matériau de fabrication est consommé.

Avantageusement, comme il sera décrit plus en détails ci-dessous, le dispositif d'avancement 27 est configuré pour entraîner un plateau 58 d'un mécanisme de mise en rotation 56 d'un dispositif de déroulement rotatif 50 du système d'alimentation 40, en rotation autour d'un axe de rotation principal R1 par rapport à un arbre 62 du mécanisme de mise en rotation 56, par avancement du fil 44, notamment grâce à une roue libre 59.

Le redresseur 28 est agencé en amont du pion de malaxage 26.

Le redresseur 28 est configuré pour faire tendre la courbure du fil 44 de matériau de fabrication déroulé vers 0.

Le robot 30 comprend au moins un bras articulé 32 et au moins un dispositif de motorisation 34 configuré pour déplacer l'au moins un bras articulé 32.

L'au moins un bras articulé 32 porte l'ensemble comportant l'au moins un moteur 22, l'effecteur 24, le pion de malaxage 26, le dispositif d'avancement 27 et le cas échéant le redresseur 28.

L'au moins un bras 32 est déplaçable entre une pluralité de positions permettant d'agencer le pion de malaxage 26 de manière précise par rapport au substrat de l'objet manufacturé à fabriquer.

Avantageusement, le système de fabrication 20 comprend en outre une unité d'adaptation de la motorisation (non-illustrée) configurée pour contrôler et piloter, en couple et en effort, la rotation du pion de malaxage 26 (en contrôlant et pilotant par exemple le couple engendré par l'au moins un moteur 22 et la force engendrée par le robot 30) et la consommation du matériau de fabrication lors du malaxage. Avantageusement, la consommation du matériau de fabrication lors du malaxage conditionne l'alimentation en matériau de fabrication fournie par le système d'alimentation 40. En particulier, l'unité d'adaptation de la motorisation est configurée en outre pour contrôler et piloter le dispositif d'avancement 27, afin d'adapter la fourniture du matériau de fabrication au pion de malaxage 26 en fonction de la consommation du matériau de fabrication lors du malaxage.

Le système d'alimentation 40 est configuré pour alimenter le système de fabrication 20 en matériau de fabrication, notamment en fonction des besoins en matériau de fabrication du système de fabrication 20.

Le système d'alimentation 40 comprend une bobine 42 de fil de matériau de fabrication, un dispositif de déroulement rotatif 50 et un dispositif de guidage 130.

La bobine 42 (visible sur les figures 1, 5 et 6) comprend le fil 44 de matériau de fabrication enroulé autour d'un axe de bobine A-A'.

Avantageusement, la bobine 42 est destinée à reposer sur le plateau 58 du mécanisme de mise en rotation 56 du dispositif de déroulement rotatif 50 de sorte que l'axe de bobine A-A' soit sensiblement perpendiculaire au plateau 58 et de sorte que la rotation du plateau 58 autour de l'axe de rotation principal R1 entraîne la rotation de la bobine 42 autour de l'axe de rotation principal R1.

Le matériau de fabrication est, par exemple, un alliage de fer, de nickel, de titane, d'aluminium et/ou de magnésium. Selon un exemple particulier, le matériau de fabrication est de l'invar, c'est-à-dire un alliage de fer et de nickel.

La bobine 42 comprend notamment entre 15 kg et 50 kg de matériau de fabrication, de préférence entre 25 kg et 40 kg de matériau de fabrication.

Le fil 44 de matériau de fabrication est, par exemple, un fil à section normale sensiblement circulaire, présentant un diamètre compris entre 2 mm et 6 mm, de préférence entre 3 mm et 5 mm, notamment sensiblement égal à 4 mm.

Le fil 44 de matériau de fabrication présente une fibre neutre. Par « fibre neutre », on entend une ligne passant par le centre de gravité des sections normales du fil 44.

Le dispositif de déroulement rotatif 50 est configuré pour dérouler le fil 44 de matériau de fabrication depuis la bobine 42.

Comme il sera décrit plus en détails ci-dessous, le dispositif de déroulement rotatif 50 est configuré pour :
- entraîner la bobine 42 en rotation autour d'un axe de rotation principal R1 ; et
- entraîner le fil 44 de matériau de fabrication déroulé en rotation autour de sa fibre neutre.

En particulier, le dispositif de déroulement rotatif 50 comprend un support 52, le mécanisme de mise en rotation 56, et un mécanisme de guidage 100.

Encore avantageusement, comme visible sur les figures 1 à 3, 10 et 11, le dispositif de déroulement rotatif 50 comprend en outre un mécanisme de protection 126.

Le support 52 est configuré pour supporter le mécanisme de mise en rotation 56, le mécanisme de guidage 100 et le cas échéant, le mécanisme de protection 126.

Comme illustré sur les figures 1 à 3, le support 52 comprend une caisse 53 montée sur roues.

Le support 52 est déplaçable dans un plan horizontal sensiblement parallèle au sol sur lequel repose la caisse 53. Ceci permet d'agencer l'ensemble comprenant le mécanisme de mise en rotation 56, le mécanisme de guidage 100 et le cas échéant le mécanisme de protection 126 par rapport au système de fabrication 20.

Comme illustré sur les exemples des figures 1 et 2, le support 52 comprend en outre un poteau 54 de maintien du dispositif de guidage 130.

Le poteau de maintien 54 est notamment agencé entre d'une part l'ensemble comprenant le mécanisme de mise en rotation 56, le mécanisme de guidage 100 et le cas échéant le mécanisme de protection 126 et d'autre part le système de fabrication 20.

Comme visible sur l'exemple de la figure 2, le poteau de maintien 54 est monté sur la caisse 53. Avantageusement, le poteau de maintien 54 est également monté autour d'un axe principal du robot 30. Ceci permet de faciliter le déplacement du système d'alimentation 40 essentiellement en rotation autour de cet axe principal du robot 30.

Le poteau de maintien 54 comprend un élément 55 de maintien d'une gaine de guidage 132 du dispositif de guidage 130.

Comme illustré sur les figures 1 et 2, l'élément de maintien 55 comprend par exemple une potence et au moins une poulie, l'au moins une poulie comprenant un réa configuré pour coopérer avec la gaine de guidage 132.

Le mécanisme de mise en rotation 56 est monté sur le support 52.

Le mécanisme de mise en rotation 56 est configuré pour entraîner la bobine 42 en rotation autour de l'axe de rotation principal R1. Selon l'exemple illustré sur les figures 1 à 11, l'axe de rotation principal R1 est confondu avec l'axe de bobine A-A'.

En particulier, le mécanisme de mise en rotation 56 est configuré pour entraîner la bobine 42 et le mécanisme de guidage 100 conjointement en rotation autour de l'axe de rotation principal R1.

Avantageusement, le mécanisme de mise en rotation 56 comprend le plateau 58.

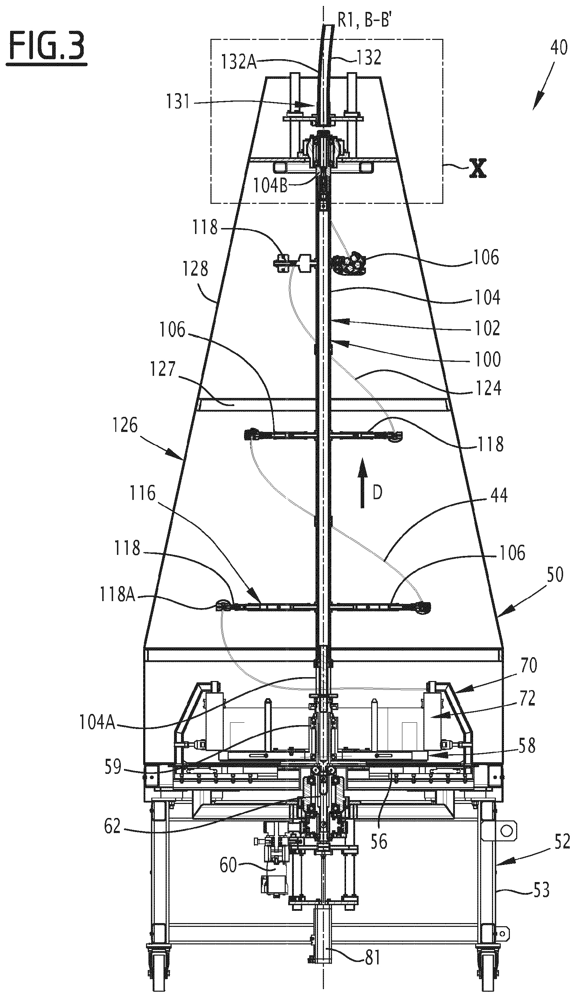

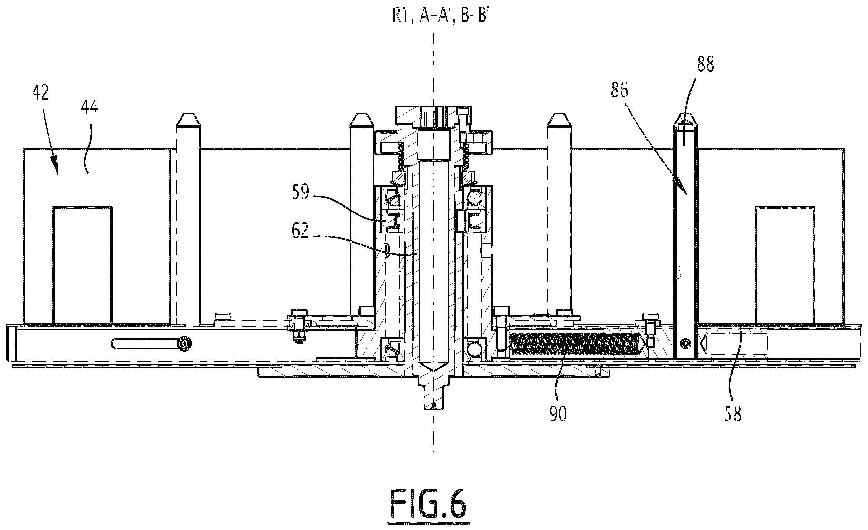

Encore avantageusement, le mécanisme de mise en rotation 56 comprend en outre :
- un moteur 60 ;
- un arbre 62 ; et
- une roue libre 59 (figures 3 et 6).

Encore avantageusement, le mécanisme de mise en rotation 56 comprend en outre des moyens 70 de confinement de la bobine 42.

Le plateau 58 est mobile en rotation autour de l'axe de rotation principal R1.

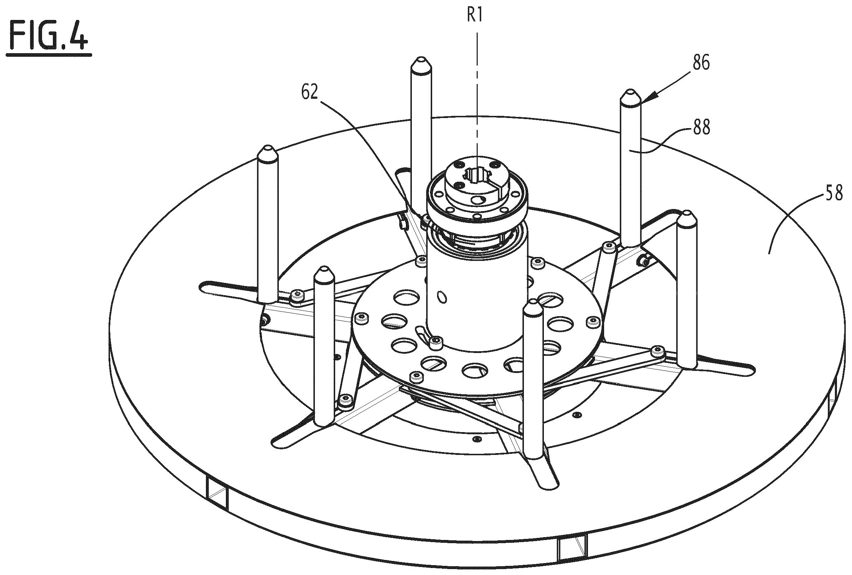

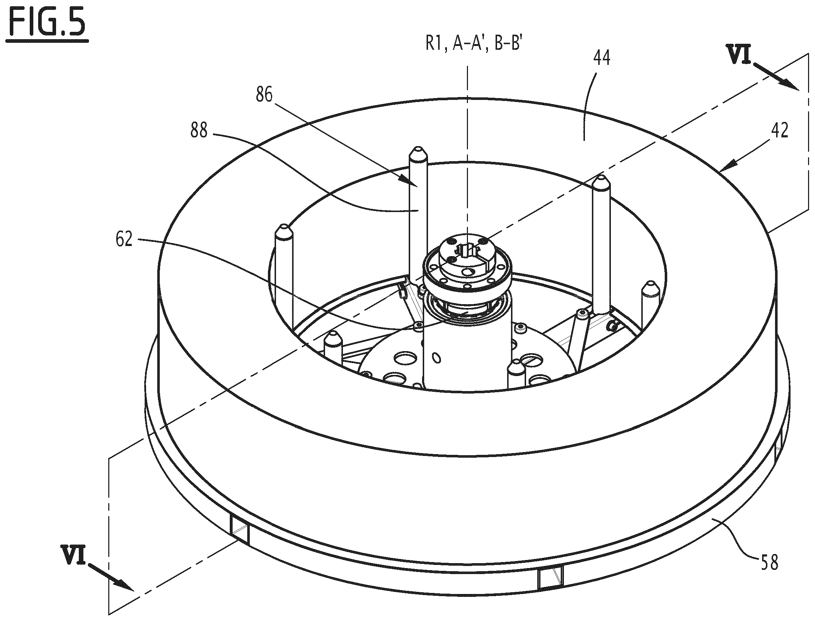

Par exemple, comme illustré sur les figures 4 et 5, le plateau 58 est une plaque annulaire s'étendant dans un plan sensiblement perpendiculaire à l'axe de rotation principal R1.

Le plateau 58 est monté sur l'arbre 62 par l'intermédiaire de la roue libre 59.

Le plateau 58 est configuré pour être entraîné en rotation par l'arbre 62 par l'intermédiaire de la roue libre 59.

L'arbre 62 s'étend sensiblement selon l'axe de rotation principal R1 et est configuré pour être entraîné en rotation par le moteur 60 autour de l'axe de rotation principal R1.

Avantageusement, l'arbre 62 comprend deux parties montées de manière amovibles l'une sur l'autre. Les deux parties de l'arbre 62 sont séparables pour permettre le montage de la bobine 42 sur le plateau 58.

La rotation de l'arbre 62 autour de l'axe de rotation principal R1 entraîne la rotation du plateau 58 autour de l'axe de rotation principal R1 via la roue libre 59.

Par exemple, la vitesse de rotation du plateau 58 autour de l'axe de rotation principal R1, engendrée par le moteur 60 et par l'intermédiaire de la roue libre 59, est comprise entre 500 tours par minute et 5 000 tours par minute.

La roue libre 59 autorise une rotation supplémentaire du plateau 58 autour de l'axe de rotation principal R1 par rapport à l'arbre 62.

L'avancement du fil 44 de matériau de fabrication déroulé par le dispositif d'avancement 27 entraîne la rotation supplémentaire du plateau 58 autour de l'axe de rotation principal R1 par rapport à l'arbre 62 et le déroulement du fil 44 de matériau de fabrication depuis la bobine 42.

La vitesse de rotation supplémentaire du plateau 58 autour de l'axe de rotation principal R1 par rapport à l'arbre 62 est par exemple comprise entre 0 tour par minute et 100 tours par minute, notamment entre 0 tour par minute et 5 tours par minute.

Les moyens de confinement 70 sont montés sur l'arbre 62, notamment directement sur l'arbre 62, de sorte à être mobiles en rotation autour de l'axe de rotation principal R1 conjointement avec l'arbre 62.

Les moyens de confinement 70 comprennent un appareil 72 de confinement de la bobine 42.

Encore avantageusement, les moyens de confinement 70 comprennent en outre un appareil de contrainte 80.

Encore avantageusement, les moyens de confinement 70 comprennent en outre un appareil de contrainte complémentaire 86.

L'appareil de confinement 72 comprend au moins un élément de confinement 75.

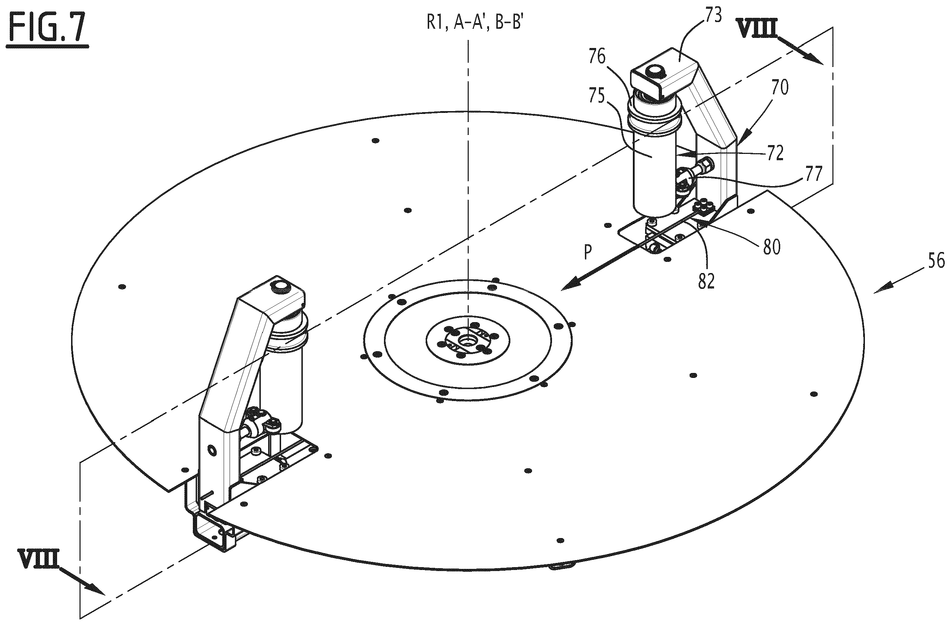

Comme illustré sur les figures 3 et 7, l'appareil de confinement 72 comprend par exemple deux éléments de confinement 75 agencés de manière symétrique autour de l'axe de rotation principal R1.

Par exemple, l'au moins un élément de confinement 75 est un rouleau (comme illustré sur les figures 3, 7 et 8) ou un sabot.

Comme illustré sur les figures 3, 7 et 8, l'au moins un élément de confinement est mobile en translation selon une direction radiale P sensiblement orthogonale à l'axe de rotation principal R1 entre :
- une position d'appui fort dans laquelle l'au moins un élément de confinement 75 est en appui sur la circonférence externe de la bobine 42, de sorte à solidariser en rotation la bobine 42 et le plateau 58 avec l'arbre 62 ; et
- une position d'appui faible dans laquelle l'au moins un élément de confinement 75 est en appui sur la circonférence externe de la bobine de sorte à autoriser la rotation supplémentaire du plateau 58 autour de l'axe de rotation principal R1 par rapport à l'arbre 62 tout en confinant la bobine 42 radialement par rapport à l'axe de rotation principal R1.

Notamment, dans la position d'appui fort, la force exercée par l'au moins un élément de confinement 75 sur la circonférence externe de la bobine 42 est plus grande que la force exercée par l'au moins un élément de confinement 75 sur la circonférence externe de la bobine 42 dans la position d'appui faible.

Le confinement radial de la bobine 42 permet d'assurer un déroulement orienté de manière optimale par rapport au mécanisme de guidage 100, notamment par rapport à des bras de guidage 106 du mécanisme de guidage 100.

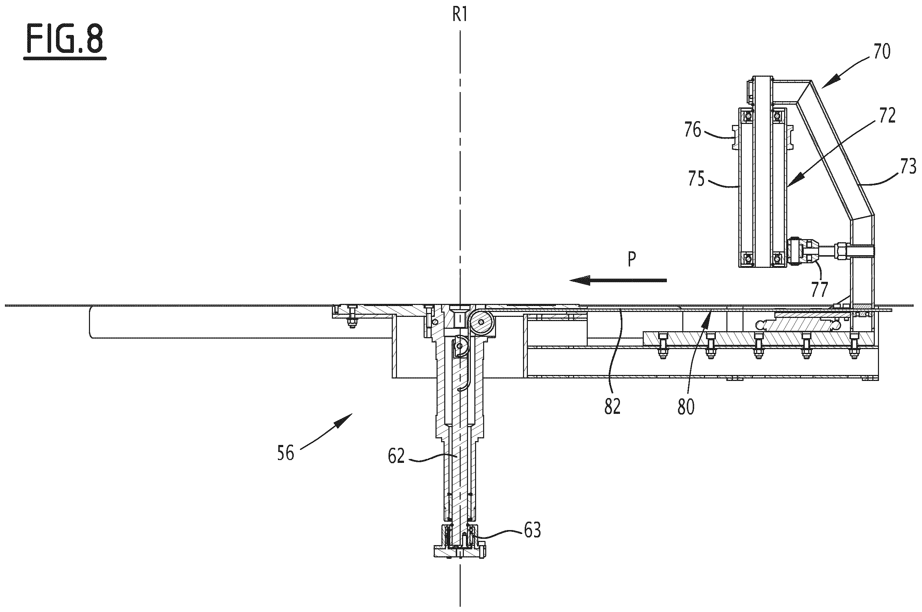

Comme illustré sur l'exemple des figures 7 et 8, l'appareil de confinement 72 comprend en outre, pour chaque élément de confinement 75 :
- un pied 73, l'élément de confinement 75 correspondant étant monté sur le pied 73 ;
- un élément annulaire 76 s'étendant en saillie radialement depuis une surface périphérique externe de l'élément de confinement 75 ; et
- un élément de contre-appui 77.

Avantageusement, le pied 73 est solidaire avec l'élément de confinement 75 correspondant en translation selon la direction radiale P.

L'élément de confinement 75 présente une surface périphérique externe destinée à être en contact avec la bobine 42, notamment la circonférence externe de la bobine 42, dans les positions d'appui fort et faible.

L'élément annulaire 76 est configuré pour servir de butée haute au fil 44 de matériau de fabrication sortant de la bobine 42.

Par exemple, l'élément annulaire 76 s'étend sur toute la circonférence externe de l'élément de confinement 75.

L'élément de contre-appui 77 s'étend en saillie sur le pied 73 jusqu'à l'élément de confinement 75. L'élément de contre-appui 77 est agencé de sorte que l'élément de confinement 75 est contraint entre la bobine 42 et l'élément de contre-appui 77, particulièrement lorsque l'élément de confinement 75 est en position d'appui fort. Cela permet d'optimiser le contact entre la circonférence externe de la bobine 42 et l'élément de confinement 75, en particulier dans la position d'appui fort, en évitant une flexion excessive de l'élément de confinement 75.

L'appareil de contrainte 80 est configuré pour contraindre radialement l'au moins un élément de confinement 75 contre la bobine 42 en direction de l'axe de rotation principale R1.

Comme illustré sur les figures 3, 7 et 8, l'appareil de contrainte 80 comprend notamment un vérin 81, un câble 82 et une pièce de découplage rotatif 63.

Le vérin 81 est solidaire du support 52 et est monté sur l'arbre 62.

Le câble 82 relie l'au moins un élément de confinement 75, notamment le pied 73, et le vérin 81.

La pièce de découplage rotatif 63 permet de découpler le vérin 81 et l'arbre 62 en rotation.

Le vérin est configuré pour tirer l'au moins un élément de confinement 75, notamment le pied 73, par l'intermédiaire du câble 82 radialement en direction de l'axe de rotation principale R1 selon la direction radiale P.

En référence aux figures 3 à 6, l'appareil de contrainte complémentaire 86 est configuré pour contraindre radialement la bobine 42 en direction de l'au moins un élément de confinement 75.

L'appareil de contrainte complémentaire 86 permet notamment d'augmenter l'appui de l'élément de confinement 75 sur la circonférence externe de la bobine 42, en particulier dans la position d'appui fort.

Notamment, l'appareil de contrainte complémentaire 86 comprend une pluralité de tiges 88 s'étendant selon une direction sensiblement parallèle à l'axe de rotation principal R1, et une pluralité d'éléments de contraintes 90.

Comme visible sur l'exemple des figures 4 et 5, l'appareil de contrainte complémentaire 86 comprend notamment six tiges 88 réparties uniformément en vis-à-vis de la circonférence interne de la bobine 42 lorsque la bobine 42 est montée sur le plateau 58.

Par exemple, comme illustré sur les figures 3 à 6, les tiges 88 sont agencées atour de l'arbre 62 du mécanisme de mise en rotation 56.

Les tiges 88 sont montées mobiles en translation sur le mécanisme de mise en rotation 56 selon la direction radiale P.

Les tiges 88 sont destinées à être en appui sur la circonférence interne de la bobine 42.

Comme illustré sur la figure 6, les éléments de contrainte 90 sont des ressorts de compression solidaires du plateau 58 configurés pour contraindre les tiges 88 vers la circonférence interne de la bobine 42.

Le mécanisme de guidage 100 est configuré pour guider le fil 44 de matériau de fabrication déroulé jusqu'au dispositif de guidage 130, notamment jusqu'à la gaine de guidage 132 du dispositif de guidage 130, en particulier jusqu'à un passage tubulaire 134 de la gaine de guidage 132 du dispositif de guidage 130, et est configuré pour contraindre le fil 44 de matériau de fabrication déroulé de sorte que le fil 44 de matériau de fabrication déroulé tourne autour de sa fibre neutre en entrée du dispositif de guidage 130.

Comme illustré sur la figure 3, l'acheminement du fil 44 de matériau de fabrication depuis la bobine 42 jusqu'au dispositif de guidage 130, a lieu selon une direction générale D sensiblement parallèle à l'axe de rotation principal R1.

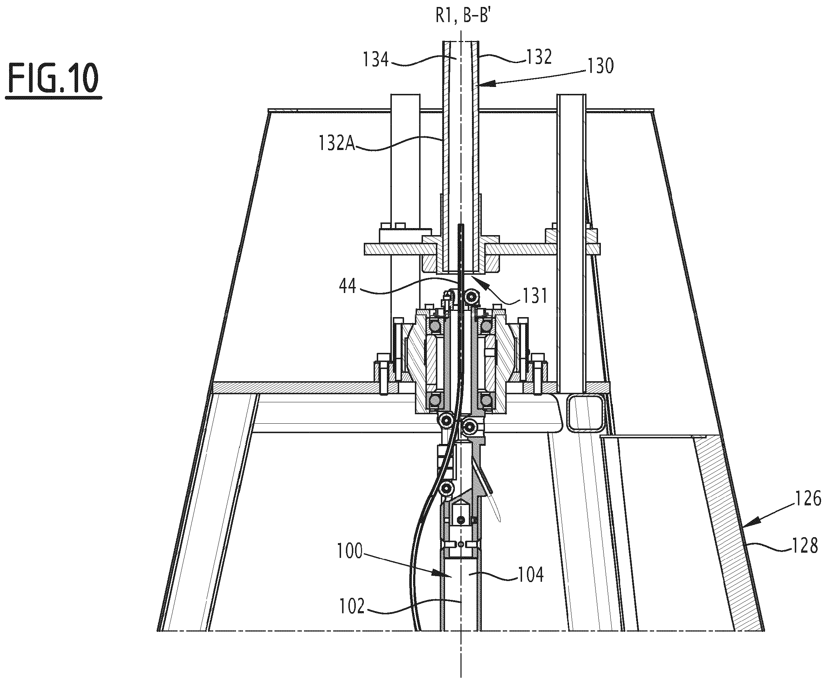

En particulier, comme visible sur les figures 1 et 3, le mécanisme de guidage 100 est configuré de sorte que la trajectoire du fil 44 de matériau de fabrication déroulé décrit, entre la bobine 42 et une entrée 131 du dispositif de guidage 130, sensiblement une trajectoire d'hélice conique (ou spiralée) dont le cône a son sommet en regard de l'entrée 131 du dispositif de guidage 130 (figure 10), notamment en regard d'une extrémité proximale 132A de la gaine de guidage 132.

Le mécanisme de guidage 100 comprend un bâti central 102 monté sur le mécanisme de mise en rotation 56, notamment sur l'arbre 62.

Avantageusement, comme illustré sur la figure 3, le bâti central 102 comprend une colonne centrale 104 et une pluralité de bras de guidage 106 montés sur la colonne centrale 104.

Encore avantageusement, le bâti central 102 comprend en outre un moyen d'équilibrage dynamique 116. Le moyen d'équilibrage dynamique 116 est un également un moyen d'équilibrage aérodynamique.

La colonne centrale 104 s'étend selon un axe de colonne B-B' confondu avec l'axe de rotation principal R1.

En référence aux figures 3 et 10, la colonne centrale 104 s'étend notamment depuis une extrémité proximale 104A montée sur le mécanisme de mise en rotation 56, notamment sur l'arbre 62, jusqu'à une extrémité distale 104B montée en regard de l'extrémité proximale 132A de la gaine de guidage 132.

La colonne centrale 104 est notamment entraînée en rotation autour de l'axe de rotation principal R1 par le mécanisme de mise en rotation 56, notamment par l'arbre 62.

Les bras de guidage 106 sont montés sur la colonne centrale 104 de manière à être répartis le long de l'axe de colonne B-B'.

Chaque bras de guidage 106 s'étend sensiblement perpendiculairement à l'axe de colonne B-B' depuis la colonne centrale 104 jusqu'à une extrémité radiale 106A.

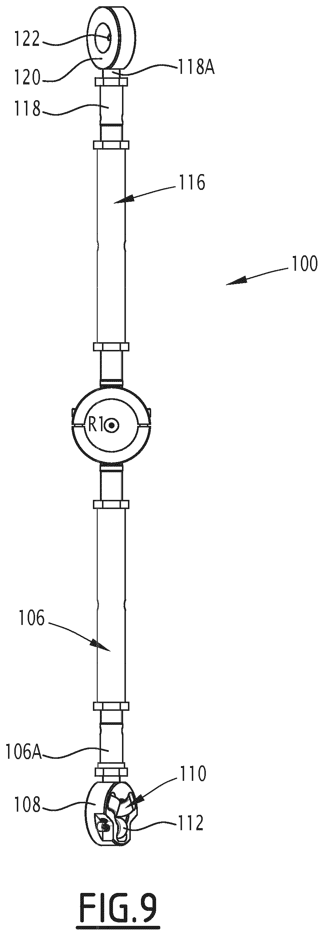

En référence aux figures 3 et 9, chaque bras de guidage 106 comprend un élément tubulaire de guidage 108. L'élément tubulaire de guidage 108 est notamment agencé à l'extrémité radiale 106A du bras de guidage 106 correspondant.

Avantageusement, l'élément tubulaire de guidage 108 délimite un orifice 110 de guidage du fil 44 de matériau de fabrication déroulé à travers lequel le fil de matériau de fabrication déroulé est destiné à s'étendre et notamment à passer lors de son acheminement vers le dispositif de guidage 130.

Encore avantageusement, l'élément tubulaire de guidage 108 comprend au moins une pièce de roulement 112 s'étendant sensiblement dans l'orifice de guidage 110 et destiné à coopérer avec le fil 44 de matériau de fabrication déroulé lors de son passage à travers l'orifice de guidage 110. Selon l'exemple illustré sur la figure 9, l'élément tubulaire de guidage 108 comprend trois pièces de roulement 112. Les pièces de roulement 112 permettent de faciliter le passage du fil 44 de matériau de fabrication déroulé à travers l'orifice de guidage 110 et de guider la trajectoire du fil 44 de manière précise.

L'au moins une pièce de roulement 112 est, par exemple, un galet ou une bille.

En référence aux figures 3 et 9, le moyen d'équilibrage dynamique 116 est monté sur la colonne centrale 104.

Le moyen d'équilibrage dynamique 116 est agencé de sorte que les masses du moyen d'équilibrage dynamique 116, des bras de guidage 106 et du fil 44 de matériau de fabrication déroulé s'étendant entre la bobine 42 et la gaine 132, soient réparties de manière sensiblement symétrique autour de l'axe de rotation principal R1.

En particulier, en référence aux figures 3 et 9, le moyen d'équilibrage dynamique 116 comprend une pluralité de bras d'équilibrage 118 et un fil d'équilibrage 124.

Les bras d'équilibrage 118 sont montés sur la colonne centrale 104 de manière à être répartis le long de l'axe de colonne B-B'.

Chaque bras d'équilibrage 118 s'étend sensiblement perpendiculairement à l'axe de colonne B-B' depuis la colonne centrale 104 jusqu'à une extrémité radiale 118A.

Comme illustré sur les exemples des figures 3 et 9, chaque bras d'équilibrage 118 s'étend à partir de la colonne centrale 104 en regard d'un bras de guidage 106 correspondant, selon la direction d'extension mais dans un sens opposé du bras de guidage 106 correspondant. Ceci permet un équilibrage dynamique, mais aussi aérodynamique.

Chaque bras d'équilibrage 118 comprend un élément tubulaire de maintien 120. L'élément tubulaire de maintien 120 est notamment agencé sur l'extrémité radiale 118A.

L'élément tubulaire de maintien 120 délimite un orifice 122 de maintien du fil d'équilibrage 124 à travers lequel s'étend le fil d'équilibrage 124.

Le fil d'équilibrage 124 et les bras d'équilibrage 118, notamment les éléments tubulaires de maintien 120, sont agencés de sorte que la masse des bras d'équilibrage 118 et du fil d'équilibrage 124 soit répartie symétriquement autour de l'axe de rotation principal R1 par rapport à la masse des bras de guidage 106 et du fil 44 de matériau de fabrication déroulé s'étendant entre la bobine 42 et la gaine 132.

Notamment, le mécanisme de guidage 100 est configuré de sorte que la trajectoire du fil d'équilibrage 124 décrit sensiblement une trajectoire d'hélice conique (ou spiralée) dont le cône a son sommet en regard de l'entrée 131 du dispositif de guidage 130, cette trajectoire étant avantageusement sensiblement symétrique de la trajectoire du fil 44 de matériau de fabrication déroulé entre la bobine 42 et l'entrée 131, par rapport à l'axe de rotation principal R1.

En référence aux figures 1 à 3 et 11, le mécanisme de protection 126 comprend une ossature 127 montée sur le support 52, un carter 128 monté sur l'ossature 127 et un capot amovible 129 monté sur le carter 128.

L'ossature 127 est monté sur le support 52 et s'étend entre le mécanisme de mise en rotation 56 et le dispositif de guidage 130, en particulier l'extrémité proximale 132A de la gaine de guidage 132.

Le carter 128 délimite, notamment avec le support 52 et avec le capot amovible 129 lorsque celui-ci est fermé, une enceinte dans laquelle est agencée le mécanisme de mise en rotation 56 et le mécanisme de guidage 100 et dans laquelle le fil 44 de matériau de fabrication déroulé est destiné à se déplacer depuis la bobine 42 vers le dispositif de guidage 130.

Par exemple, le carter 128 présente une forme générale conique tronquée.

Le capot amovible 129 est déplaçable entre une position ouverte (illustrée sur les figures 1 et 2) dans laquelle le capot amovible 129 donne accès à l'enceinte depuis l'extérieur et une position fermée (non-illustrée) dans laquelle l'accès à l'enceinte est empêché. Dans la position fermée, l'opération de déroulement du fil depuis la bobine 42 jusqu'au dispositif de guidage 130 est protégée de toute interaction nuisible avec des éléments externes au système d'alimentation 40.

Par exemple, l'ensemble comprenant le carter 128 et le capot amovible 129 présente, lorsque le capot amovible 129 est dans sa position fermée, une forme générale conique.

Le dispositif de guidage 130 est configuré pour guider le fil 44 de matériau de fabrication déroulé depuis le dispositif de déroulement rotatif 50 jusqu'au système de fabrication 20.

Comme illustré sur l'exemple des figures 1 à 3 et 10, le dispositif de guidage 130 comprend une gaine de guidage 132.

Le dispositif de guidage 130 comprend une entrée 131. L'entrée 131 correspond par exemple à une extrémité proximale 132A de la gaine de guidage 132.

La gaine de guidage 132 s'étend depuis l'extrémité proximale 132A connectée au dispositif de déroulement rotatif 50 jusqu'à une extrémité distale 132B connectée au système de fabrication 20.

Avantageusement, la gaine de guidage 132, notamment l'extrémité proximale 132A, est monté sur le support 52, notamment par l'intermédiaire du mécanisme de protection 126. Comme illustré sur l'exemple des figures 3 et 10, la gaine de guidage 132, notamment l'extrémité proximale 132A, est monté sur l'ossature 127 du mécanisme de protection 126.

La gaine de guidage 132 est configuré pour guider le fil 44 de matériau de fabrication déroulé depuis le dispositif de déroulement rotatif 50 jusqu'au système de fabrication 20.

Notamment, la gaine de guidage 132 délimite un passage tubulaire 134 dans lequel le fil 44 de matériau est destiné à s'étendre et se déplacer, aussi bien en rotation qu'en translation.

La gaine de guidage 132 présente avantageusement une section droite circulaire.

La gaine de guidage 132 présente par exemple un diamètre intérieur compris entre 12 mm et 26 mm.

Comme illustré sur les figures 1 et 2, la gaine de guidage 132 s'étend entre l'extrémité proximale 132A et l'extrémité distale 132B selon une trajectoire courbe.

Par exemple, la trajectoire de la gaine de guidage 132 présente un rayon de courbure minimum compris entre 1 m et 2 m.

Les figures 1 et 2 illustrent plusieurs positionnements possibles de la gaine de guidage 132 en fonction du positionnement du support 52 et en fonction du positionnement de l'au moins un bras 32 du robot 30. Un premier positionnement de la gaine de guidage 132 est représenté en trait continu et deux positionnements alternatifs de la gaine de guidage 132 sont représentés en pointillés sur les figures 1 et 2.

Avantageusement, le dispositif de guidage 130 comprend en outre un mécanisme de refroidissement de la gaine de guidage 132 (non-illustré).

Par exemple, le mécanisme de refroidissement comprend un moyen de mise en circulation d'un fluide de refroidissement configuré pour faire circuler le fluide de refroidissement en contact avec la gaine de guidage 132. Par exemple, le moyen de mise en circulation du fluide de refroidissement est configuré pour faire circuler le fluide de refroidissement dans la gaine de guidage 132, notamment dans le passage tubulaire 134 autour du fil 44 de matériau de fabrication déroulé, ou autour de la gaine de guidage 132.

Le fluide de refroidissement est par exemple de l'air.

Le moyen de mise en circulation du fluide de refroidissement comprend par exemple un compresseur.

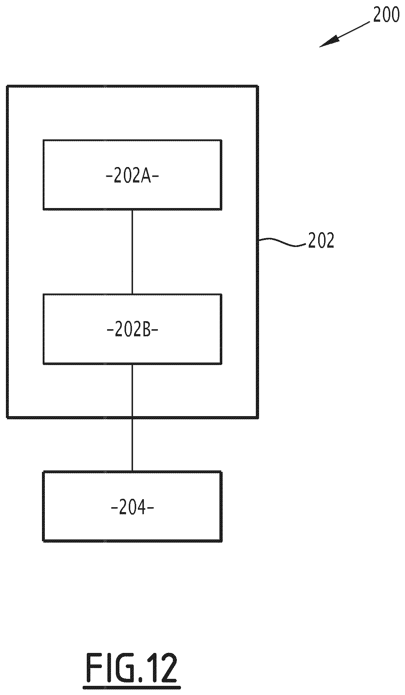

Dans ce qui suit, en référence à la figure 12, on décrit un procédé 200 de fabrication d'un objet manufacturé à l'aide de l'installation de fabrication 10.

Le procédé de fabrication 200 comprend une étape 202 d'alimentation du système de fabrication 20 en matériau de fabrication par le système d'alimentation 40.

L'étape d'alimentation comprend une sous-étape 202A de déroulement du fil 44 de matériau de fabrication depuis la bobine 42 par le dispositif de déroulement rotatif 50.

La sous-étape de déroulement 202A comprend une mise en rotation de la bobine 42 autour de l'axe de rotation principal R1 et une mise en rotation du fil 44 de matériau de fabrication déroulé autour de sa fibre neutre par le dispositif de déroulement rotatif 50.

En particulier, le mécanisme de mise en rotation 56 entraîne la bobine 42 et le mécanisme de guidage 100 conjointement en rotation autour de l'axe de rotation principal R1. Ceci permet notamment de faire tourner le fil 44 autour de sa fibre neutre au niveau de l'extrémité distale 104B de la colonne centrale 104 du mécanisme de guidage 100.

Avantageusement, la sous-étape 202A de déroulement du fil 44 comprend en outre un acheminement du fil 44 de matériau de fabrication déroulé depuis la bobine 42 jusqu'au dispositif de guidage 130 selon la direction générale D notamment par avancement du fil 44 de matériau de fabrication déroulé par le dispositif d'avancement 27 du système de fabrication 20.

Encore avantageusement, la sous-étape 202A de déroulement du fil 44 comprend en outre un guidage du fil 44 de matériau de fabrication déroulé jusqu'à la gaine de guidage 132 par le mécanisme de guidage 100, notamment en le faisant progressivement tourner autour de sa fibre neutre.

Par exemple, le mécanisme de guidage 100 guide le fil 44 de sorte que la trajectoire du fil 44 déroulé décrit sensiblement une trajectoire d'hélice conique dont le cône a son sommet en regard de de l'entrée 131 du dispositif de guidage 130.

Notamment, lors du guidage du fil 44 par le mécanisme 100, le fil 44 de matériau déroulé s'étend à travers les orifices de guidage 110 délimités par les éléments tubulaires de guidage 108 des bras de guidage 106.

En particulier, le fil 44 coopère avec l'au moins une pièce de roulement 112 de chaque élément tubulaire de guidage 108.

L'étape d'alimentation 202 comprend en outre une sous-étape 202B de guidage du fil 44 de matériau de fabrication déroulé depuis le dispositif de déroulement rotatif 50 jusqu'au système de fabrication 20 par le dispositif de guidage 130, notamment par la gaine de guidage 132.

En particulier, lors de la sous-étape de guidage 202B, le fil 44 de matériau s'étend et se déplace, aussi bien en rotation autour sa fibre neutre qu'en translation dans le passage tubulaire 134 délimité par la gaine de guidage 132.

Le procédé comprend en outre une étape 204 de fabrication de l'objet manufacturé par fabrication par friction-malaxage à partir du matériau de fabrication par le système de fabrication 20.

En particulier, l'étape de fabrication 204 comprend une sous-étape de malaxage du fil 44 de matériau de fabrication déroulé par le pion de malaxage 26 pour fabriquer l'objet manufacturé.

Notamment, parallèlement à la sous-étape de malaxage du fil 44, l'étape de fabrication comprend en outre une sous-étape d'avancement du fil 44 de matériau de fabrication par le dispositif d'avancement 27.

Optionnellement, avant la sous-étape de malaxage, l'étape de fabrication comprend une sous-étape de redressage du fil 44 de matériau de fabrication déroulé par le redresseur 28. Notamment, lors de la sous-étape de redressage, le redresseur 28 fait tendre la courbure du fil 44 de matériau de fabrication déroulé vers 0.

Selon une variante non-illustrée, le mécanisme de guidage 100 comprend au moins un élément de guidage annulaire monté sur la circonférence interne du carter 128 ou sur l'ossature 127.

L'au moins un élément de guidage annulaire comprend une surface radiale interne d'appui du fil 44 de matériau de fabrication déroulé, sur laquelle le fil 44 est destiné à s'appuyer lors de son transit depuis la bobine 42 vers le dispositif de guidage 130.

Par exemple, le mécanisme de guidage 100 comprend une pluralité d'éléments de guidage annulaires répartis le long de l'axe de rotation principal R1, agencés de sorte que le fil 44 soit contraint pour que qu'il décrive sensiblement une trajectoire d'hélice conique comme mentionné ci-dessus.

Selon une autre variante non-illustrée, le dispositif de guidage 130 comprend au moins une douille à billes agencée à l'intérieur de la gaine de guidage 132, en particulier dans le passage tubulaire 134.

L'au moins une douille à billes délimite un espace tubulaire interne creux dans lequel le fil 44 de matériau de fabrication déroulé est destiné à circuler. Ceci permet de guider le fil 44 de matériau de fabrication déroulé dans le passage tubulaire 134 en rotation sans frottement.

L'au moins une douille à billes est configurée pour réduire la friction résultant des mouvements de rotation et de translation du fil 44 de matériau de fabrication déroulé par rapport à la gaine de guidage 132.

Avantageusement, le dispositif de guidage 130 comprend une pluralité de douilles à billes agencées entre différentes sections longitudinales de la gaine de guidage 132.

Selon encore une autre variante non-illustrée, le mécanisme de refroidissement comprend une conduite flexible étanche enveloppant la gaine de guidage 132.

Selon cette variante, le mécanisme de refroidissement comprend en outre un moyen de mise en circulation d'un fluide de refroidissement auxiliaire configuré pour faire circuler le fluide de refroidissement auxiliaire, par exemple de l'eau, dans un espace annulaire délimité par la gaine de guidage 132 et la conduite flexible.

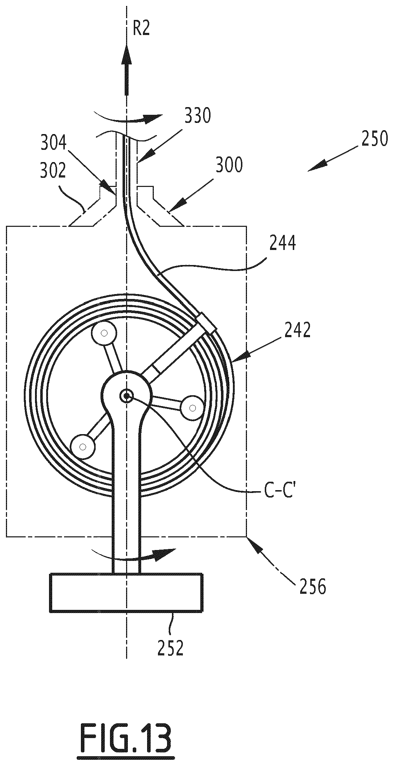

Selon un deuxième mode de réalisation illustré sur la figure 13, le mécanisme de mise en rotation 256 est configuré pour entraîner la bobine 242 en rotation autour d'un axe de rotation principal R2 sensiblement perpendiculaire à l'axe de bobine 242 et passant par le centre de la bobine 242. Dans ce mode de réalisation, la bobine 242 est en outre mobile en rotation autour de l'axe de bobine C-C' de sorte que l'avancement du fil 244 de matériau de fabrication déroulé par le dispositif d'avancement entraîne la rotation supplémentaire de la bobine 242 autour de l'axe de bobine 242 et le déroulement du fil 244 de matériau de fabrication depuis la bobine 242.

Dans le deuxième mode de réalisation, le mécanisme 300 de guidage du fil de matériau de fabrication déroulé comprend un entonnoir de guidage 302 comportant un passage tubulaire 304 s'étendant sensiblement selon l'axe de rotation principal R2 en regard de l'entrée du dispositif de guidage 330. Le passage tubulaire 304 est destiné à canaliser le fil 244 de matériau de fabrication déroulé de sorte que le fil 244 tourne autour de sa fibre neutre en entrée du dispositif de guidage 330. La rotation de la bobine 42 autour de l'axe de rotation principal R2 sensiblement perpendiculaire à l'axe de la bobine 42, notamment conjointement avec la coopération du fil 244 avec l'entonnoir de guidage 302, entraîne la rotation du fil 244 de matériau de fabrication déroulé autour de sa fibre neutre.

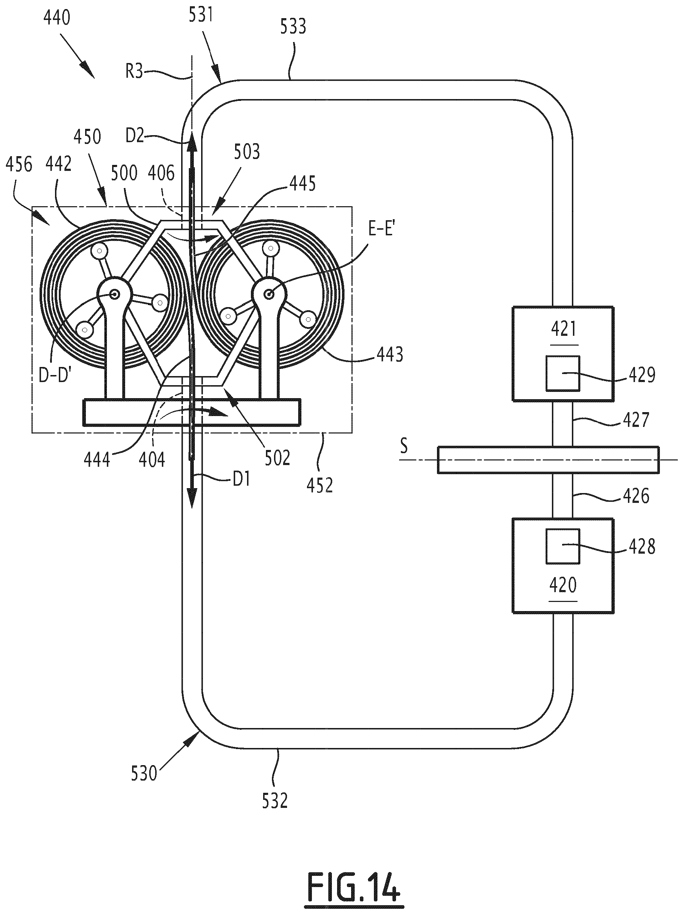

Selon un troisième mode de réalisation illustré sur la figure 14, l'installation de fabrication 10 comprend un système de fabrication 420 et un système de fabrication auxiliaire 421. Le système de fabrication auxiliaire 421 est configuré pour fabriquer l'objet manufacturé conjointement avec le système de fabrication 420 ou un objet manufacturé auxiliaire, par fabrication additive par friction-malaxage à partir du matériau de fabrication.

Le système de fabrication 420 comprend notamment :
- au moins un moteur ;
- un effecteur configuré pour être entraîné en rotation par l'au moins un moteur ;
- un pion de malaxage 426 configuré pour être entraîné en rotation par l'effecteur, le pion de malaxage 426 étant destiné à malaxer un fil 444 de matériau de fabrication déroulé d'une bobine 442 pour fabriquer l'objet manufacturé, le pion de malaxage 426 étant configuré pour être entraîné en rotation par l'effecteur auxiliaire ;

- un dispositif 428 d'avancement du fil 444 de matériau de fabrication déroulé de la bobine 442, configuré pour déplacer le fil 444 de matériau de fabrication déroulé de la bobine 442 vers le pion de malaxage 426.

Le système de fabrication auxiliaire 421 comprend notamment :
- au moins un moteur auxiliaire ;
- un effecteur auxiliaire configuré pour être entraîné en rotation par l'au moins un moteur auxiliaire ;
- un pion de malaxage auxiliaire 427 configuré pour être entraîné en rotation par l'effecteur auxiliaire, le pion de malaxage auxiliaire 427 étant destiné à malaxer un fil 445 de matériau de fabrication déroulé d'une bobine auxiliaire 443 pour fabriquer l'objet manufacturé ou l'objet manufacturé auxiliaire, le pion de malaxage auxiliaire 427 étant configuré pour être entraîné en rotation par l'effecteur auxiliaire ;
- un dispositif auxiliaire 429 d'avancement du fil 445 de matériau de fabrication déroulé de la bobine auxiliaire 443, configuré pour déplacer le fil 445 de matériau de fabrication déroulé de la bobine auxiliaire vers le pion de malaxage auxiliaire 427.

Dans le troisième mode de réalisation, le système d'alimentation 440 est configuré pour alimenter le système de fabrication 420 et le système de fabrication auxiliaire 421 en matériau de fabrication.

Le système d'alimentation 440 comprend la bobine 442 d'un fil de matériau de fabrication enroulé autour d'un axe de bobine D-D' et la bobine auxiliaire 443 d'un fil de matériau de fabrication enroulé autour d'un axe de bobine auxiliaire E-E'. L'axe de bobine D-D' et l'axe de bobine auxiliaire E-E' sont notamment parallèles.

Le dispositif de déroulement rotatif 450 est configuré pour dérouler le fil de matériau de fabrication depuis la bobine 442 et le fil de matériau de fabrication depuis la bobine auxiliaire 443.

Le système d'alimentation 440 comprend un dispositif 530 de guidage du fil de matériau de fabrication déroulé de la bobine 442 depuis le dispositif de déroulement rotatif 450 jusqu'au système de fabrication 420 et un dispositif 531 de guidage auxiliaire du fil de matériau de fabrication déroulé de la bobine 443 depuis le dispositif de déroulement rotatif 450 jusqu'au système de fabrication auxiliaire 421.

Le dispositif de guidage 530 comprend une gaine de guidage 532 s'étendant depuis une extrémité proximale connectée au dispositif de déroulement rotatif 450 jusqu'à une extrémité distale connectée au système de fabrication 420.

La gaine de guidage 532 est configurée pour guider le fil de matériau de fabrication déroulé de la bobine 442 depuis le dispositif de déroulement rotatif 450 jusqu'au système de fabrication 420.

Le dispositif de guidage auxiliaire 531 comprend une gaine de guidage auxiliaire 533 s'étendant depuis une extrémité proximale connectée au dispositif de déroulement rotatif 450 jusqu'à une extrémité distale connectée au système de fabrication auxiliaire 421.

La gaine de guidage auxiliaire 533 est configurée pour guider le fil de matériau de fabrication déroulé de la bobine auxiliaire 443 depuis le dispositif de déroulement rotatif 450 jusqu'au système de fabrication auxiliaire 421.

Par exemple, la bobine 442 et la bobine auxiliaire 443 sont montées sur le mécanisme de mise en rotation 456 de sorte que la bobine 442 et la bobine auxiliaire 443 s'étendent dans un même plan.

Le mécanisme de mise en rotation 456 est configuré pour entraîner la bobine 442 et la bobine auxiliaire 443 conjointement en rotation autour d'un axe de rotation principal R3, l'axe de rotation principal R3 s'étendant sensiblement tangentiellement par rapport à la circonférence externe de chacune de la bobine 442 et de la bobine auxiliaire 443.

Le fil de matériau de fabrication de la bobine 442 est acheminé vers le dispositif de guidage 530 selon une direction générale D1.

Le fil de matériau de fabrication de la bobine auxiliaire 443 est acheminé vers le dispositif de guidage auxiliaire 531 selon une direction générale auxiliaire D2 sensiblement opposée à la direction générale D1. La direction générale D1 et la direction générale auxiliaire D2 sont sensiblement parallèles à l'axe de rotation principal R3 du mécanisme de mise en rotation 456.

Notamment, le mécanisme de guidage 500 est configuré pour guider le fil 444 et le fil 445 de matériau de fabrication déroulé jusqu'au dispositif de guidage 530, respectivement 531 et pour contraindre le fil 444 et le fil 445 de sorte que les fils 444, 445 tournent autour de leur fibre neutre respective en entrée du dispositif de guidage 530, respectivement 531.

En particulier, comme illustré sur la figure 14, le mécanisme de guidage 500 est configuré pour guider et/ou contraindre le fil de matériau de fabrication de la bobine 442 et le fil de matériau de fabrication de la bobine auxiliaire 443 de sorte qu'ils s'étendent sensiblement le long de l'axe de rotation principal R3 entre la bobine 442 et le dispositif de guidage 530, respectivement entre la bobine auxiliaire 443 et le dispositif de guidage auxiliaire 531.

Le déroulement du fil de la bobine 442 et du fil de la bobine 443 se font alors par des rotations supplémentaires des deux bobines 442 et 443 autour de leur axe de bobine respectif D-D' et E-E'.

Avantageusement, dans le troisième mode de réalisation, le mécanisme 500 de guidage du fil de matériau de fabrication déroulé comprend un premier entonnoir de guidage 502 et un deuxième entonnoir de guidage 503. Le premier entonnoir de guidage 502 comporte un passage tubulaire 404 s'étendant sensiblement selon l'axe de rotation principal R3 en regard de l'entrée du dispositif de guidage 530. Le passage tubulaire 404 est destiné à canaliser le fil 444 de matériau de fabrication déroulé de sorte que le fil 444 tourne autour de sa fibre neutre en entrée du dispositif de guidage 530. Le deuxième entonnoir de guidage 503 comporte un passage tubulaire 406 s'étendant sensiblement selon l'axe de rotation principal R3 en regard de l'entrée du dispositif de guidage auxiliaire 531. Le passage tubulaire 406 est destiné à canaliser le fil 445 de matériau de fabrication déroulé de sorte que le fil 445 tourne autour de sa fibre neutre en entrée du dispositif de guidage auxiliaire 531. La rotation des bobines 442 et 443 autour de l'axe de rotation principal R3, qui est notamment sensiblement perpendiculaire au plan comprenant les axes D-D' et E-E', en particulier conjointement avec la coopération des fils 444 et 445 avec les entonnoirs de guidage 502, 503, entraîne la rotation des fils 444 et 445 de matériau de fabrication déroulés autour de leur fibre neutre respective.

Avantageusement, le système de fabrication 420 et le système de fabrication auxiliaire 421 sont agencés de sorte que le pion de malaxage 426 et le pion de malaxage auxiliaire 427 sont disposés de manière symétrique par rapport à un plan de symétrie S, de sorte que les vecteurs de forces exercées respectivement par le pion de malaxage 426 et par le pion de malaxage auxiliaire 427 soient de directions et normes sensiblement égales mais de sens opposés et de sorte que le matériau de fabrication de la bobine 442 et le matériau de fabrication de la bobine auxiliaire 443 soient malaxés et avancés selon des trajectoires respectives symétriques. Ceci permet d'obtenir une composante totale des forces exercées par le pion de malaxage 426 et le pion de malaxage auxiliaire 427 qui est très sensiblement réduite, tout en avançant et en malaxant la matière selon des trajectoires symétriques, notamment par rapport au plan de symétrie S.

Encore avantageusement, le pion de malaxage 426 et le pion de malaxage auxiliaire 427 sont alimentés d'une même quantité de matériau de fabrication par unité de temps.

Par exemple, le pion de malaxage 426 et le pion de malaxage auxiliaire 427 sont destinés à la fabrication de deux portions opposées d'un objet manufacturé s'étendant sensiblement selon le plan de symétrie S. En variante, le pion de malaxage 426 et le pion de malaxage auxiliaire 427 sont destinés à la fabrication de deux objets manufacturés agencés l'un contre l'autre de manière symétrique par rapport au plan de symétrie S.

L'installation de fabrication 10 selon l'invention est simple, rapide et efficace. Elle présente en outre moins de risque pour un opérateur destiné à interagir avec elle et mène à la fabrication d'un objet manufacturé de qualité supérieure.

En effet, les bobines 42 de matériau de fabrication sont faciles à manufacturer et aisément stockées et transportées.

Grâce à l'utilisation de ces bobines, le matériau de fabrication est consommé de manière continue en nécessitant aucun suivi d'opérateur pour l'approvisionnement en matériau de fabrication. La fabrication de l'objet manufacturée est donc facilitée et la qualité de l'objet manufacturée obtenu est améliorée.

En outre, l'utilisation conjointe du mécanisme de mise en rotation 56 et du mécanisme de guidage 100 permettent de transformer une rotation de la bobine 42 en une rotation du fil 44 sur lui-même à grande vitesse et d'engendrer un déroulement du fil 44 à relativement plus faible vitesse, suivant les besoins du système de fabrication 20.

Le guidage du fil 44 par le dispositif de guidage 130, notamment par la gaine de guidage 132 permet un redressage significatif de la courbure du fil 44 (que celui-ci adopte notamment à cause de son stockage sous forme enroulée dans la bobine 42).

L'utilisation du moyen d'équilibrage dynamique 116 permet d'obtenir un équilibre dynamique et aérodynamique du système d'alimentation 40 qui soit natif et stable.

L'utilisation de l'appareil de contrainte 80 et de l'appareil de contrainte complémentaire 86 permettent de contrecarrer l'éjection possible du fil 44 par la force centrifuge lors de la mise en rotation autour de l'axe de rotation principal R1. La force du vérin 81 sera fixée en fonction de ce phénomène, notamment dans la position d'appui fort, tout en permettant en position d'appui faible, de déconfiner du fil 44 par rotation supplémentaire de la bobine 42 et du plateau 58, monté sur roue libre.

## Revendications

1. Installation (10) de fabrication d'un objet manufacturé, comprenant :
- un système de fabrication (20 ; 420) configuré pour fabriquer l'objet manufacturé par fabrication additive par friction-malaxage à partir d'un matériau de fabrication ; et
- un système d'alimentation (40 ; 440) configuré pour alimenter le système de fabrication (20 ; 420) en matériau de fabrication ;
le système d'alimentation (40) comprenant :
- une bobine (42 ; 242 ; 442) d'un fil (44 ; 244; 444) de matériau de fabrication enroulé autour d'un axe de bobine (A-A' ; C-C' ; D-D'), le fil (44 ; 244 ; 444) de matériau de fabrication présentant une fibre neutre ;
- un dispositif de déroulement rotatif (50 ; 250 ; 450) configuré pour dérouler le fil (44 ; 244 ; 444) de matériau de fabrication depuis la bobine (42 ; 242 ; 442) ; et
- un dispositif (130 ; 330 ; 530) de guidage du fil (44 ; 244 ; 444) de matériau de fabrication déroulé depuis le dispositif de déroulement rotatif (50 ; 250 ; 450) jusqu'au système de fabrication (20 ; 420) ; l'installation étant **caractérisée en ce que** le dispositif de déroulement rotatif (50 ; 250 ; 450) est configuré pour :
- entraîner la bobine (42 ; 242 ; 442) en rotation autour d'un axe de rotation principal (R1 ; R2 ; R3) ; et
- entraîner le fil (44 ; 244 ; 444) de matériau de fabrication déroulé en rotation autour de sa fibre neutre.

2. Installation (10) de fabrication selon la revendication 1, dans laquelle le dispositif (130 ; 330 ; 530) de guidage du fil (44 ; 244 ; 444) de matériau de fabrication déroulé comprend une gaine de guidage (132 ; 532) s'étendant depuis une extrémité proximale (132A) connectée au dispositif de déroulement rotatif (50 ; 250 ; 450) jusqu'à une extrémité distale (132B) connectée au système de fabrication (20 ; 420), la gaine de guidage (132 ; 532) étant configurée pour guider le fil (44 ; 244 ; 444) de matériau de fabrication déroulé depuis le dispositif de déroulement rotatif (50 ; 250 ; 450) jusqu'au système de fabrication (20 ; 420).

3. Installation de fabrication (10) selon la revendication 1 ou 2, dans laquelle le dispositif de déroulement rotatif (50 ; 250 ; 450) comprend :
- un support (52 ; 252 ; 452) ;
- un mécanisme de mise en rotation (56 ; 256 ; 456) monté sur le support (52 ; 252 ; 452) et configuré pour entraîner la bobine (42 ; 242 ; 442) en rotation autour de l'axe de rotation principal (R1 ; R2 ; R3) ; et
- un mécanisme (100 ; 300 ; 500) de guidage du fil (44 ; 244 ; 444) de matériau de fabrication déroulé, configuré pour guider le fil (44 ; 244 ; 444) de matériau de fabrication déroulé jusqu'au dispositif de guidage (130 ; 330 ; 530) et configuré pour contraindre le fil (44 ; 244 ; 444) de matériau de fabrication déroulé de sorte que le fil (44 ; 244 ; 444) de matériau de fabrication déroulé tourne autour de sa fibre neutre en entrée du dispositif de guidage (130 ; 330 ; 530).

4. Installation de fabrication (10) selon la revendication 3, dans laquelle le dispositif de guidage (130) comprend une entrée (131) destinée à recevoir le fil (44) de matériau de fabrication déroulé fourni par le dispositif de déroulement rotatif (50),
le mécanisme de guidage (100) étant configuré de sorte que la trajectoire du fil (44) de matériau de fabrication déroulé décrit, entre la bobine (42) et l'entrée (131) du dispositif de guidage (130), sensiblement une trajectoire d'hélice conique dont le cône a son sommet en regard de l'entrée (131) du dispositif de guidage (130).

5. Installation de fabrication (10) selon la revendication 4, dans laquelle le mécanisme de mise en rotation (56) est configuré pour entraîner la bobine (42) et le mécanisme de guidage (100) conjointement en rotation autour de l'axe de rotation principal (R1),
le mécanisme de guidage (100) comprenant un bâti central (102) comportant :
- une colonne centrale (104) s'étendant selon un axe de colonne (B-B') confondu avec l'axe de rotation principal (R1) depuis une extrémité proximale (104A) montée sur le mécanisme de mise en rotation (56) jusqu'à une extrémité distale (104B) montée en regard de l'entrée (131) du dispositif de guidage (130) ;
- une pluralité de bras de guidage (106) montés sur la colonne centrale (104) de manière à être répartis le long de l'axe de colonne (B-B'), chaque bras de guidage (106) s'étendant sensiblement perpendiculairement à l'axe de colonne (B-B') depuis la colonne centrale (104), chaque bras de guidage (106) comprenant un élément tubulaire de guidage (108) délimitant un orifice (110) de guidage du fil (44) de matériau de fabrication déroulé à travers lequel le fil (44) de matériau de fabrication déroulé est destiné à s'étendre.

6. Installation de fabrication (10) selon la revendication 5, dans laquelle l'élément tubulaire de guidage (108) comprend au moins une pièce de roulement (112), s'étendant sensiblement dans l'orifice de guidage (110) et destiné à coopérer avec le fil (44) de matériau de fabrication déroulé lors de son passage à travers l'orifice de guidage (110).

7. Installation de fabrication (10) selon la revendication 5 ou 6, dans laquelle le bâti central (102) comprend en outre un moyen d'équilibrage dynamique (116) monté sur la colonne centrale (104) et agencé de sorte que les masses du moyen d'équilibrage dynamique (116), des bras de guidage (106) et du fil (44) de matériau de fabrication déroulé soient réparties de manière sensiblement symétrique autour de l'axe de rotation principal (R1).

8. Installation de fabrication (10) selon la revendication 7, dans laquelle le moyen d'équilibrage dynamique (116) comprend un fil d'équilibrage (124) et une pluralité de bras d'équilibrage (118) montés sur la colonne centrale (104) de manière à être répartis le long de l'axe de colonne (B-B'), chaque bras d'équilibrage (118) s'étendant sensiblement perpendiculairement à l'axe de colonne (B-B') depuis la colonne centrale (104) jusqu'à une extrémité radiale (118A), chaque bras d'équilibrage (118) comprenant un élément tubulaire de maintien (120) délimitant un orifice (122) de maintien du fil d'équilibrage (124) à travers lequel s'étend le fil d'équilibrage (124),
les bras d'équilibrage (118) et le fil d'équilibrage (124) étant agencés de sorte que la masse des bras d'équilibrage (118) et du fil d'équilibrage (124) soit répartie symétriquement autour de l'axe de rotation principal (R1) par rapport à la masse des bras de guidage (106) et du fil (44) de matériau de fabrication déroulé.

9. Installation (10) de fabrication selon l'une quelconque des revendications 3 à 8, dans laquelle le système de fabrication (20 ; 420) comprend :
- au moins un moteur (22) ;
- un effecteur (24) configuré pour être entraîné en rotation par l'au moins un moteur (22) ;
- un pion de malaxage (26 ; 426) configuré pour être entraîné en rotation par l'effecteur (24), le pion de malaxage (26 ; 426) étant destiné à malaxer le fil (44 ; 444) de matériau de fabrication déroulé pour fabriquer l'objet manufacturé ;
- un dispositif (27 ; 428) d'avancement du fil (44 ; 444) de matériau de fabrication déroulé, configuré pour déplacer le fil (44 ; 444) de matériau de fabrication déroulé vers le pion de malaxage (26 ; 426).

10. Installation (10) de fabrication selon la revendication 9, dans laquelle la vitesse de rotation du pion de malaxage (26) est sensiblement égale à la vitesse de rotation du fil (44) de matériau de fabrication déroulé autour de sa fibre neutre.

11. Installation (10) de fabrication selon la revendication 9 ou 10, dans laquelle l'axe de rotation principal (R1) est confondu avec l'axe de bobine (A-A'), le mécanisme de mise en rotation (56) comprenant un plateau (58) mobile en rotation autour de l'axe de rotation principal (R1), la bobine (42) étant destinée à reposer sur le plateau (58) de sorte que l'axe de bobine (A-A') soit sensiblement perpendiculaire au plateau (58) et de sorte que la rotation du plateau (58) autour de l'axe de rotation principal (R1) entraîne la rotation de la bobine (42) autour de l'axe de rotation principal (R1).

12. Installation (10) de fabrication selon la revendication 11, dans laquelle le mécanisme de mise en rotation (56) comprend en outre :
- un moteur (60) ;
- un arbre (62) s'étendant sensiblement selon l'axe de rotation principal (R1) et configuré pour être entraîné en rotation par le moteur (60) autour de l'axe de rotation principal (R1) ; et
- une roue libre (59) ;
le plateau (58) étant monté sur l'arbre (62) par l'intermédiaire de la roue libre (59),
la rotation de l'arbre (62) autour de l'axe de rotation principal (R1) entraînant la rotation du plateau (58) autour de l'axe de rotation principal (R1) via la roue libre (59),
la roue libre (59) autorisant une rotation supplémentaire du plateau (58) autour de l'axe de rotation principal (R1) par rapport à l'arbre (62),
l'avancement du fil (44) de matériau de fabrication déroulé par le dispositif d'avancement (27) entraînant la rotation supplémentaire du plateau (58) autour de l'axe de rotation principal (R1) par rapport à l'arbre (62) et le déroulement du fil (44) de matériau de fabrication depuis la bobine (42).

13. Installation (10) de fabrication selon la revendication 12, dans laquelle la vitesse de la rotation supplémentaire du plateau (58) autour de l'axe de rotation principal (R1) par rapport à l'arbre (62) est comprise entre 0 tour par minute et 100 tours par minute, par exemple entre 0 tour par minute et 5 tours par minute.

14. Installation (10) de fabrication selon la revendication 12 ou 13, dans laquelle le mécanisme de mise en rotation (56) comprend en outre des moyens (70) de confinement de la bobine (42),
les moyens de confinement (70) étant montés sur l'arbre (62) de sorte à être mobiles en rotation autour de l'axe de rotation principal (R1) conjointement avec l'arbre (62),
les moyens de confinement (70) comprenant un appareil de confinement (72) comportant au moins un élément de confinement (75) mobile en translation selon une direction radiale (P) sensiblement orthogonale à l'axe de rotation principal (R1) entre :
- une position d'appui fort dans laquelle l'au moins un élément de confinement (75) est en appui sur la circonférence externe de la bobine (42) de sorte à solidariser en rotation la bobine (42) et le plateau (58) avec l'arbre (62) ; et
- une position d'appui faible dans laquelle l'au moins un élément de confinement (75) est en appui sur la circonférence externe de la bobine (42) de sorte à autoriser la rotation supplémentaire du plateau (58) autour de l'axe de rotation principal (R1) par rapport à l'arbre (62) tout en confinant la bobine (42) radialement par rapport à l'axe de rotation principal (R1).

15. Installation (10) de fabrication selon la revendication 14, dans laquelle les moyens de confinement (70) comprennent en outre un appareil de contrainte (80) configuré pour contraindre radialement l'au moins un élément de confinement (75) contre la bobine (42) en direction de l'axe de rotation principal (R1).

16. Installation (10) de fabrication selon la revendication 14 ou 15 dans laquelle les moyens de confinement (70) comprennent en outre un appareil de contrainte complémentaire (86) configuré pour contraindre radialement la bobine (42) en direction de l'au moins un élément de confinement (75).

17. Installation (10) de fabrication selon la revendication 3, dans lequel l'axe de rotation principal (R2) est sensiblement perpendiculaire à l'axe de bobine (C-C') et passe par le centre de la bobine (242), la bobine (242) étant montée mobile en rotation autour de l'axe de bobine (C-C') sur le mécanisme de mise en rotation (256).

18. Installation (10) de fabrication selon la revendication 17 lorsque prise en combinaison avec la revendication 9 ou 10, dans laquelle l'avancement du fil (244) de matériau de fabrication déroulé par le dispositif d'avancement (27) entraîne la rotation supplémentaire de la bobine (242) autour de l'axe de bobine (C-C') et le déroulement du fil (244) de matériau de fabrication depuis la bobine (242).

19. Installation (10) de fabrication selon l'une quelconque des revendications 1 à 3 lorsque prise en combinaison avec la revendication 9 ou 10, comprenant en outre un système de fabrication auxiliaire (421) configuré pour fabriquer l'objet manufacturé ou pour fabriquer un objet manufacturé auxiliaire par fabrication additive par friction malaxage à partir du matériau de fabrication,
le système d'alimentation (440) étant configuré en outre pour alimenter le système de fabrication auxiliaire (421) en matériau de fabrication, le système d'alimentation (440) comprenant en outre une bobine auxiliaire (443) d'un fil (445) de matériau de fabrication enroulé autour d'un axe de bobine auxiliaire (E-E'),
le dispositif de déroulement rotatif (450) étant configuré en outre pour dérouler le fil (445) de matériau de fabrication depuis la bobine auxiliaire (443), le système d'alimentation (440) comprenant en outre un dispositif (531) de guidage auxiliaire du fil (445) de matériau de fabrication déroulé de la bobine auxiliaire (443) depuis le dispositif de déroulement rotatif (450) jusqu'au système de fabrication auxiliaire (421),
le système de fabrication auxiliaire (421) comprenant :
- un pion de malaxage auxiliaire (427) destiné à malaxer le fil (445) de matériau de fabrication déroulé de la bobine auxiliaire (443) pour fabriquer l'objet manufacturé ou l'objet manufacturé auxiliaire ; et
- un dispositif auxiliaire (429) d'avancement du fil (445) de matériau de fabrication déroulé de la bobine auxiliaire (443), configuré pour déplacer le fil (445) de matériau de fabrication déroulé de la bobine auxiliaire (443) vers le pion de malaxage auxiliaire (427) ;
le pion de malaxage (426) et le pion de malaxage auxiliaire (427) étant aptes à être disposés de manière symétrique par rapport à un plan de symétrie (S), de sorte que des vecteurs de forces exercées respectivement par le pion de malaxage (426) et par le pion de malaxage auxiliaire (427) soient de directions et normes sensiblement égales mais de sens opposés et de sorte que le matériau de fabrication de la bobine (442) et le matériau de fabrication de la bobine auxiliaire (443) soient malaxés et avancés selon des trajectoires respectives symétriques.

20. Procédé (200) de fabrication d'un objet manufacturé à partir d'un matériau de fabrication à l'aide d'une installation de fabrication (10) selon l'une quelconque des revendications précédentes, le procédé (200) comprenant :
- une étape (202) d'alimentation du système de fabrication (20) en matériau de fabrication par le système d'alimentation (40) ; et
- une étape (204) de fabrication de l'objet manufacturé par fabrication par friction-malaxage à partir du matériau de fabrication par le système de fabrication (20) ;
l'étape d'alimentation (202) comprenant une sous-étape (202A) de déroulement du fil (44) de matériau de fabrication depuis la bobine (42) par le dispositif de déroulement rotatif (50) et une sous-étape (202B) de guidage du fil (44) de matériau de fabrication déroulé depuis le dispositif de déroulement rotatif (50) jusqu'au système de fabrication (20) par le dispositif de guidage (130),
la sous-étape de déroulement (202A) comprenant en outre :
- une mise en rotation de la bobine (42) autour de l'axe de rotation principal (R1) ; et
- une mise en rotation du fil (44) de matériau de fabrication déroulé autour de sa fibre neutre par le dispositif de déroulement rotatif (50).

## Patentansprüche

1. Anlage (10) zur Fertigung eines hergestellten Objekts, umfassend:
- ein Fertigungssystem (20; 420), das konfiguriert ist, um das hergestellte Objekt durch additive Fertigung durch Reibrührschweißen aus einem Fertigungsmaterial zu fertigen; und
- ein Zufuhrsystem (40; 440), das konfiguriert ist, um dem Fertigungssystem (20; 420) Fertigungsmaterial zuzuführen;
das Zufuhrsystem (40) umfassend:
- eine Spule (42; 242; 442) eines Fadens (44; 244; 444) von Fertigungsmaterial, der um eine Spulenachse (A-A'; C-C'; D-D') gewickelt ist, wobei der Faden (44; 244; 444) von Fertigungsmaterial eine neutrale Faser aufweist;
- eine drehbare Abwickelvorrichtung (50; 250; 450), die konfiguriert ist, um den Faden (44; 244; 444) von Fertigungsmaterial von der Spule (42; 242; 442) abzuwickeln; und
- eine Vorrichtung (130; 330; 530) zum Führen des Fadens (44; 244; 444) von Fertigungsmaterial, der von der drehbaren Abwickelvorrichtung (50; 250; 450) abgewickelt wird, zu dem Fertigungssystem (20; 420); wobei die Anlage **dadurch gekennzeichnet ist, dass**
die drehbare Abwickelvorrichtung (50; 250; 450) zu Folgendem konfiguriert ist:
- Antreiben der Spule (42; 242; 442) zur Drehung um eine Hauptdrehachse (R1; R2; R3); und
- Antreiben des Fadens (44; 244; 444) von abgewickeltem Fertigungsmaterial zur Drehung um seine neutrale Faser.

2. Fertigungsanlage (10) nach Anspruch 1, wobei die Vorrichtung (130; 330; 530) zum Führen des abgewickelten Fadens (44; 244; 444) von Fertigungsmaterial eine Führungshülse (132; 532) umfasst, die sich von einem proximalen Ende (132A) erstreckt, das mit der drehbaren Abwickelvorrichtung (50; 250; 450) verbunden ist, zu einem distalen Ende (132B), das mit dem Fertigungssystem (20; 420) verbunden ist, wobei die Führungshülse (132; 532) konfiguriert ist, um den abgewickelten Faden (44; 244; 444) von Fertigungsmaterial von der drehbaren Abwickelvorrichtung (50; 250; 450) zu dem Fertigungssystem (20; 420) zu führen.

3. Fertigungsanlage (10) nach Anspruch 1 oder 2, wobei die drehbare Abwickelvorrichtung (50; 250; 450) Folgendes umfasst:
- - eine Halterung (52; 252; 452);
- einen Drehmechanismus (56; 256; 456), der an der Halterung (52; 252; 452) montiert und konfiguriert ist, um die Spule (42; 242; 442) zur Drehung um die Hauptdrehachse (R1; R2; R3) anzutreiben; und
- einen Mechanismus (100; 300; 500) zum Führen des abgewickelten Fadens (44; 244; 444) von Fertigungsmaterial, der konfiguriert ist, um den abgewickelten Faden (44; 244; 444) von Fertigungsmaterial zu der Führungsvorrichtung (130; 330; 530) zu führen, und konfiguriert ist, um den abgewickelten Faden (44; 244; 444) von Fertigungsmaterial zusammenzuziehen, dass sich der abgewickelte Faden (44; 244; 444) von Fertigungsmaterial um seine neutrale Faser am Eingang der Führungsvorrichtung (130; 330; 530) dreht.

4. Fertigungsanlage (10) nach Anspruch 3, wobei die Führungsvorrichtung (130) einen Eingang (131) zum Aufnehmen des von der drehbaren Abwickelvorrichtung (50) bereitgestellten abgewickelten Fadens (44) von Fertigungsmaterial aufweist, wobei der Führungsmechanismus (100) so konfiguriert ist, dass der Verlauf des abgewickelten Fadens (44) von Fertigungsmaterial zwischen der Spule (42) und dem Eingang (131) der Führungsvorrichtung (130) im Wesentlichen einen Verlauf einer konischen Helix beschreibt, deren Konus seinen Scheitelpunkt gegenüber dem Eingang (131) der Führungsvorrichtung (130) aufweist.

5. Fertigungsanlage (10) nach Anspruch 4, wobei der Drehmechanismus (56) konfiguriert ist, um die Spule (42) und den Führungsmechanismus (100) gemeinsam zur Drehung um die Hauptdrehachse (R1) anzutreiben,
der Führungsmechanismus (100) umfassend einen mittleren Rahmen (102), umfassend:
- eine mittlere Säule (104), die sich entlang einer Säulenachse (B-B') erstreckt, die mit der Hauptdrehachse (R1) zusammenfällt, von einem proximalen Ende (104A), das auf dem Drehmechanismus (56) montiert ist, zu einem distalen Ende (104B), das gegenüber dem Eingang (131) der Führungsvorrichtung (130) montiert ist;
- eine Vielzahl von Führungsarmen (106), die an der mittleren Säule (104) montiert sind, sodass sie entlang der Säulenachse (B-B') verteilt sind, wobei sich jeder Führungsarm (106) im Wesentlichen senkrecht zu der Säulenachse (B-B') von der mittleren Säule (104) aus erstreckt, wobei jeder Führungsarm (106) ein rohrförmiges Führungselement (108) umfasst, das eine Führungsöffnung (110) für den abgewickelten Faden (44) von Fertigungsmaterial begrenzt, durch die sich der abgewickelte Faden (44) von Fertigungsmaterial erstrecken soll.

6. Fertigungsanlage (10) nach Anspruch 5, wobei das rohrförmige Führungselement (108) mindestens ein Rollstück (112) umfasst, das sich im Wesentlichen in die Führungsöffnung (110) erstreckt und dazu bestimmt ist, mit dem abgewickelten Faden (44) aus Fertigungsmaterial zusammenzuwirken, wenn er die Führungsöffnung (110) durchquert.

7. Fertigungsanlage (10) nach Anspruch 5 oder 6, wobei der mittlere Rahmen (102) ferner eine dynamische Ausgleichseinrichtung (116) umfasst, die an der mittleren Säule (104) montiert und angeordnet ist, sodass die Massen der dynamischen Ausgleichseinrichtung (116), der Führungsarme (106) und des abgewickelten Fadens (44) von Fertigungsmaterial im Wesentlichen symmetrisch um die Hauptdrehachse (R1) verteilt sind.

8. Fertigungsanlage (10) nach Anspruch 7, wobei die dynamische Ausgleichseinrichtung (116) einen Ausgleichsfaden (124) und eine Vielzahl von Ausgleichsarmen (118) umfasst, die an der mittleren Säule (104) so montiert sind, dass sie entlang der Säulenachse (B-B') verteilt sind, wobei jeder Ausgleichsarm (118) sich im Wesentlichen senkrecht zu der Säulenachse (B-B') von der mittleren Säule (104) zu einem radialen Ende (118A) erstreckt, wobei jeder Ausgleichsarm (118) ein röhrenförmiges Halteelement (120) umfasst, das eine Öffnung (122) zum Halten des Ausgleichsfadens (124) begrenzt, durch die sich der Ausgleichsfaden (124) erstreckt,
wobei die Ausgleichsarme (118) und der Ausgleichsfaden (124) angeordnet sind, sodass die Masse der Ausgleichsarme (118) und des Ausgleichsfadens (124) symmetrisch um die Hauptdrehachse (R1) in Bezug auf die Masse der Führungsarme (106) und des abgewickelten Fadens (44) von Fertigungsmaterial verteilt ist.

9. Fertigungsanlage (10) nach einem der Ansprüche 3 bis 8, wobei das Fertigungssystem (20; 420) Folgendes umfasst:
- mindestens einen Motor (22);
- einen Effektor (24), der konfiguriert ist, um von dem mindestens einen Motor (22) in Drehung versetzt zu werden;
- einen Rührbolzen (26; 426), der konfiguriert ist, um von dem Effektor (24) in Drehung versetzt zu werden, wobei der Rührbolzen (26; 426) dazu dient, den Faden (44; 444) von Fertigungsmaterial zu rühren, der abgewickelt wird, um das hergestellte Objekt zu fertigen;
- eine Vorrichtung (27; 428) zum Vorschieben des abgewickelten Fadens (44; 444) von Fertigungsmaterial, die konfiguriert ist, um den abgewickelten Faden (44; 444) von Fertigungsmaterial in Richtung des Rührbolzens (26; 426) zu bewegen.

10. Fertigungsanlage (10) zur Herstellung nach Anspruch 9, wobei die Drehgeschwindigkeit des Rührbolzens (26) im Wesentlichen gleich wie die Drehgeschwindigkeit des Fadens (44) von Fertigungsmaterial ist, der um seine neutrale Faser abgewickelt wird.

11. Fertigungsanlage (10) nach Anspruch 9 oder 10, wobei die Hauptdrehachse (R1) mit der Spulenachse (A-A') zusammenfällt, wobei der Drehmechanismus (56) eine Platte (58) umfasst, die um die Hauptdrehachse (R1) drehbar ist, wobei die Spule (42) dazu bestimmt ist, auf der Platte (58) zu ruhen, sodass die Spulenachse (A-A') im Wesentlichen senkrecht zu der Platte (58) ist und sodass die Drehung der Platte (58) um die Hauptdrehachse (R1) die Drehung der Spule (42) um die Hauptdrehachse (R1) bewirkt.

12. Fertigungsanlage (10) nach Anspruch 11, wobei der drehbare Mechanismus (56) ferner Folgendes umfasst:
- einen Motor (60);
- eine Welle (62), die sich im Wesentlichen entlang der Hauptdrehachse (R1) erstreckt und konfiguriert ist, um von dem Motor (60) um die Hauptdrehachse (R1) in Drehung versetzt zu werden; und - einen Freilauf (59);
wobei die Platte (58) über den Freilauf (59) an der Welle (62) montiert ist,
wobei die Drehung der Welle (62) um die Hauptdrehachse (R1) die Drehung der Platte (58) um die Hauptdrehachse (R1) über den Freilauf (59) bewirkt,
der Freilauf (59) eine zusätzliche Drehung der Platte (58) um die Hauptdrehachse (R1) in Bezug auf die Welle (62) ermöglicht,
wobei das Vorwärtsbewegen des von der Vorschubeinrichtung (27) abgewickelten Fadens (44) von Fertigungsmaterial eine weitere Drehung der Platte (58) um die Hauptdrehachse (R1) in Bezug auf die Welle (62) und das Abwickeln des Fadens (44) von Fertigungsmaterial von der Spule (42) bewirkt.

13. Fertigungsanlage (10) nach Anspruch 12, wobei die Geschwindigkeit der zusätzlichen Drehung der Platte (58) um die Hauptdrehachse (R1) in Bezug auf die Welle (62) zwischen 0 Umdrehungen pro Minute und 100 Umdrehungen pro Minute ist, beispielsweise zwischen 0 Umdrehungen pro Minute und 5 Umdrehungen pro Minute.

14. Fertigungsanlage (10) nach Anspruch 12 oder 13, wobei der drehbare Mechanismus (56) zusätzlich Einrichtungen (70) zum Einschließen der Spule (42) umfasst, wobei die Einschließeinrichtungen (70) auf der Welle (62) montiert sind, um gemeinsam mit der Welle (62) um die Hauptdrehachse (R1) bewegbar zu sein,
die Einschließeinrichtungen (70) umfassend eine Einschließvorrichtung (72), umfassend mindestens ein Einschließelement (75), das in einer radialen Richtung (P), die im Wesentlichen orthogonal zu der Hauptdrehachse (R1) ist, translatorisch bewegbar ist zwischen:
- einer starken Stützposition, in der das mindestens eine Begrenzungselement (75) an dem Außenumfang der Spule (42) aufliegt, sodass die Spule (42) und die Platte (58) drehfest mit der Welle (62) verbunden sind; und
- einer schwachen Stützposition, in der das mindestens eine Begrenzungselement (75) an dem Außenumfang der Spule (42) aufliegt, um eine weitere Drehung der Platte (58) um die Hauptdrehachse (R1) in Bezug auf die Welle (62) zuzulassen, während es die Spule (42) radial in Bezug auf die Hauptdrehachse (R1) begrenzt.

15. Fertigungsanlage (10) nach Anspruch 14, wobei die Einschließeinrichtungen (70) ferner eine Zwangsvorrichtung (80) umfassen, die konfiguriert ist, um das mindestens eine Einschließelement (75) radial gegen die Spule (42) in Richtung der Hauptdrehachse (R1) zu zwingen.

16. Fertigungsanlage (10) nach Anspruch 14 oder 15, wobei die Einschließeinrichtungen (70) ferner eine komplementäre Zwangsvorrichtung (86) umfassen, die konfiguriert ist, um die Spule (42) radial in Richtung des mindestens einen Einschließelements (75) zu zwingen.

17. Fertigungsanlage (10) nach Anspruch 3, wobei die Hauptdrehachse (R2) im Wesentlichen senkrecht zu der Spulenachse (C-C') ist und durch die Mitte der Spule (242) verläuft, wobei die Spule (242) drehbar um die Spulenachse (C-C') auf dem Drehmechanismus (256) montiert ist.

18. Fertigungsanlage (10) nach Anspruch 17, wenn genommen in Kombination mit Anspruch 9 oder 10, wobei der Vorschub des von der Vorschubeinrichtung (27) abgewickelten Fadens (244) von Fertigungsmaterial dazu führt, dass die Spule (242) weiter um die Spulenachse (C-C') gedreht wird und der Faden (244) von Fertigungsmaterial von der Spule (242) abgewickelt wird.

19. Fertigungsanlage (10) nach einem der Ansprüche 1 bis 3, wenn in Kombination mit Anspruch 9 oder 10 genommen, ferner umfassend ein Hilfsfertigungssystem (421), das konfiguriert ist, um den hergestellten Gegenstand zu fertigen oder einen Hilfsherstellungsgegenstand mittels additiver Fertigung durch Reibrührschweißen aus dem Fertigungsmaterial zu fertigen,
wobei das Zufuhrsystem (440) ferner konfiguriert ist, um dem Hilfsfertigungssystem (421) Fertigungsmaterial zuzuführen, wobei das Zufuhrsystem (440) ferner eine Hilfsspule (443) aus einem Faden (445) von Fertigungsmaterial umfasst, der um eine Hilfsspulenachse (E-E') gewickelt ist,
die drehbare Abwickelvorrichtung (450) ferner konfiguriert ist, um den Faden (445) von Fertigungsmaterial von der Hilfsspule (443) abzuwickeln, das Zufuhrsystem (440) ferner umfassend eine Vorrichtung (531) zur Hilfsführung des von der Hilfsspule (443) abgewickelten Fadens (445) von Fertigungsmaterial von der drehbaren Abwickelvorrichtung (450) zu dem Hilfsfertigungssystem (421),
das Hilfsfertigungssystem (421), umfassend:
- einen Hilfsrührbolzen (427) zum Rühren des von der Hilfsspule (443) abgewickelten Fadens (445) von Fertigungsmaterial, um den hergestellten Gegenstand oder den Hilfsherstellungsgegenstand herzustellen; und
- eine Hilfsvorrichtung (429) zum Vorschieben des von der Hilfsspule (443) abgewickelten Fadens (445) von Fertigungsmaterial, die konfiguriert ist, um den von der Hilfsspule (443) abgewickelten Faden (445) von Fertigungsmaterial in Richtung des Hilfsrührbolzens (427) zu bewegen;
wobei der Rührbolzen (426) und der Hilfsrührbolzen (427) geeignet sind, um symmetrisch in Bezug auf eine Symmetrieebene (S) angeordnet zu sein, sodass Vektoren von Kräften, die jeweils durch den Rührbolzen (426) und den Hilfsrührbolzen (427) ausgeübt werden, im Wesentlichen gleiche Richtungen und Normen, aber entgegengesetzte Richtungen aufweisen, und sodass das Fertigungsmaterial der Spule (442) und das Fertigungsmaterial der Hilfsspule (443) gerührt und entlang jeweiliger symmetrischer Bahnen vorgeschoben werden.

20. Fertigungsverfahren (200) eines hergestellten Gegenstands aus einem Fertigungsmaterial unter Verwendung einer Fertigungsanlage (10) nach einem der vorherigen Ansprüche, das Verfahren (200) umfassend:
- einen Zufuhrschritt (202) von Fertigungsmaterial durch das Zufuhrsystem (40) zu dem Fertigungssystem (20); und
- einen Fertigungsschritt (204) des hergestellten Gegenstands durch Reibrührfertigung aus dem Fertigungsmaterial durch das Fertigungssystem (20);
der Zufuhrschritt (202) umfassend einen Unterschritt (202A) eines Abwickelns des Fadens (44) von Fertigungsmaterial von der Spule (42) durch die drehbare Abwickelvorrichtung (50) und einen Unterschritt (202B) eines Führens des Fadens (44) von Fertigungsmaterial, der von der drehbaren Abwickelvorrichtung (50) abgewickelt wird, zu dem Fertigungssystem (20) durch die Führungsvorrichtung (130),
wobei der Abwickelunterschritt (202A) ferner Folgendes umfasst:
- ein Indrehungversetzen der Spule (42) um die Hauptdrehachse (R1); und
- ein Indrehungversetzen des abgewickelten Fadens (44) von Fertigungsmaterial um seine neutrale Faser durch die drehbare Abwickelvorrichtung (50).

## Claims

1. A manufacturing installation (10) for manufacturing a manufactured object, comprising:
- a manufacturing system (20; 420) configured to manufacture the manufactured object by additive friction stir deposition from a manufacturing material; and
- a feed system (40; 440) configured to feed the manufacturing system (20; 420) with manufacturing material;
the feed system (40) comprising:
- a spool (42; 242; 442) of manufacturing material wire (44; 244; 444) wound about a spool axis (A-A'; C-C'; D-D'), the manufacturing material wire (44; 244; 444) presenting a neutral fiber;
- a rotary unwinding device (50; 250; 450) configured to unwind the manufacturing material wire (44; 244; 444) from the spool (42; 242; 442); and
- a guiding device (130; 330; 530) for guiding the unwound manufacturing material wire (44; 244; 444) from the rotary unwinding device (50; 250; 450) to the manufacturing system (20; 420);
the installation being **characterized in that** the rotary unwinding device (50; 250; 450) is configured to:
- drive the spool (42; 242; 442) in rotation about a principal axis of rotation (R1; R2; R3); and
- drive the unwound manufacturing material wire (44; 244; 444) in rotation about its neutral fiber.

2. The manufacturing installation (10) according to claim 1, wherein the guiding device (130; 330; 530) for guiding the unwound manufacturing material wire (44; 244; 444) comprises a guide sheath (132; 532) extending from a proximal end (132A) connected to the rotary unwinding device (50; 250; 450) to a distal end (132B) connected to the manufacturing system (20; 420), the guide sheath (132; 532) being configured to guide the unwound manufacturing material wire (44; 244; 444) from the rotary unwinding device (50; 250; 450) to the manufacturing system (20; 420).

3. The manufacturing installation (10) according to claim 1 or 2, wherein the rotary unwinding device (50; 250; 450) comprises:
- a support (52; 252; 452);
- a rotation mechanism (56; 256; 456) mounted on the support (52; 252; 452) and configured to drive the spool (42; 242; 442) in rotation about the principal axis of rotation (R1; R2; R3); and
- a guiding mechanism (100; 300; 500) for guiding the unwound manufacturing material wire (44; 244; 444), configured to guide the unwound manufacturing material wire (44; 244; 444) to the guiding device (130; 330; 530) and configured to constrain the unwound manufacturing material wire (44; 244; 444) so that the unwound manufacturing material wire (44; 244; 444) turns about its neutral fiber at an inlet of the guiding device (130; 330; 530).

4. The manufacturing installation (10) according to claim 3, wherein the guiding device (130) comprises an inlet (131) intended to receive the unwound manufacturing material wire (44) supplied by the rotary unwinding device (50),
the guiding mechanism (100) being configured so that the trajectory of the unwound manufacturing material wire (44) describes, between the spool (42) and the inlet (131) of the guiding device (130), substantially a conical helix trajectory, the cone of which has its apex facing the inlet (131) of the guiding device (130).

5. The manufacturing installation (10) according to claim 4, wherein the rotation mechanism (56) is configured to drive the spool (42) and the guiding mechanism (100) jointly in rotation about the principal axis of rotation (R1),
the guiding mechanism (100) comprising a central frame (102) including:
- a central column (104) extending according to a column axis (B-B') coincident with the principal axis of rotation (R1) from a proximal end (104A) mounted on the rotation mechanism (56) to a distal end (104B) mounted facing the inlet (131) of the guiding device (130);
- a plurality of guide arms (106) mounted on the central column (104) so as to be distributed along the column axis (B-B'), each guide arm (106) extending substantially perpendicular to the column axis (B-B') from the central column (104), each guide arm (106) comprising a tubular guide element (108) delimiting an orifice (110), for guiding the unwound manufacturing material wire (44), through which the unwound manufacturing material wire (44) is intended to extend.

6. The manufacturing installation (10) according to claim 5, wherein the tubular guide element (108) comprises at least one rolling part (112), extending substantially into the guide orifice (110) and intended to cooperate with the unwound manufacturing material wire (44) as it passes through the guide orifice (110).

7. The manufacturing installation (10) according to claim 5 or 6, wherein the central frame (102) further comprises a dynamic balancing means (116) mounted on the central column (104) and arranged so that the masses of the dynamic balancing means (116), the guide arms (106) and the unwound manufacturing material wire (44) are distributed substantially symmetrically about the principal axis of rotation (R1).

8. The manufacturing installation (10) according to claim 7, wherein the dynamic balancing means (116) comprises a balancing wire (124) and a plurality of balancing arms (118) mounted on the central column (104) so as to be distributed along the column axis (B-B'), each balancing arm (118) extending substantially perpendicular to the column axis (B-B') from the central column (104) to a radial end (118A), each balancing arm (118) comprising a tubular holding element (120) delimiting an orifice (122), for holding the balancing wire (124), through which the balancing wire (124) extends,
the balancing arms (118) and the balancing wire (124) being arranged so that the mass of the balancing arms (118) and the balancing wire (124) is distributed symmetrically about the main axis of rotation (R1) relative to the mass of the guide arms (106) and the unwound manufacturing material wire (44).

9. The manufacturing installation (10) according to any one of claims 3 to 8, wherein the manufacturing system (20; 420) comprises:
- at least one motor (22);
- an effector (24) configured to be driven in rotation by the at least one motor (22);
- a stirring pin (26; 426) configured to be driven in rotation by the effector (24), the stirring pin (26; 426) being intended to stir the unwound manufacturing material wire (44; 444) to manufacture the manufactured object;
- a feed device (27; 428) for feeding the unwound manufacturing material wire (44; 444), configured to displace the unwound manufacturing material wire (44; 444) toward the stirring pin (26; 426).

10. The manufacturing installation (10) according to claim 9, wherein the speed of rotation of the stirring pin (26) is substantially equal to the speed of rotation of the unwound manufacturing material wire (44) about its neutral fiber.

11. The manufacturing installation (10) according to claim 9 or 10, wherein the principal axis of rotation (R1) is coincident with the spool axis (A-A'), the rotation mechanism (56) comprising a plate (58) movable in rotation about the principal axis of rotation (R1), the spool (42) being intended to rest on the plate (58) so that the spool axis (A-A') is substantially perpendicular to the plate (58) and so that rotation of the plate (58) about the principal axis of rotation (R1) drives the spool (42) in rotation about the principal axis of rotation (R1).

12. The manufacturing installation (10) according to claim 11, wherein the rotation mechanism (56) further comprises:
- a motor (60);
- a shaft (62) extending substantially according to the principal axis of rotation (R1) and configured to be driven in rotation by the motor (60) about the principal axis of rotation (R1); and
- a freewheel (59);
the plate (58) being mounted on the shaft (62) via the freewheel (59),
the rotation of the shaft (62) about the principal axis of rotation (R1) driving the plate (58) in rotation about the principal axis of rotation (R1) via the freewheel (59),
the freewheel (59) allowing further rotation of the plate (58) about the principal axis of rotation (R1) relative to the shaft (62),
the feeding of the unwound manufacturing material wire (44) by the feed device (27) driving the additional rotation of the plate (58) about the principal axis of rotation (R1) relative to the shaft (62) and the unwinding of the manufacturing material wire (44) from the spool (42).

13. The manufacturing installation (10) according to claim 12, wherein the speed of the additional rotation of the plate (58) about the principal axis of rotation (R1) relative to the shaft (62) is between 0 revolution per minute and 100 revolutions per minute, for example between 0 revolution per minute and 5 revolutions per minute.

14. The manufacturing installation (10) according to claim 12 or 13, wherein the rotation mechanism (56) further comprises means (70) for containing the spool (42),
the containment means (70) being mounted on the shaft (62) so as to be movable in rotation about the principal axis of rotation (R1) jointly with the shaft (62),
the containment means (70) comprising a containment apparatus (72) including at least one containment element (75) movable in translation according to a radial direction (P) substantially orthogonal to the principal axis of rotation (R1) between:
- a strong support position in which the at least one containment element (75) bears on the outer circumference of the spool (42) so as to secure, in rotation, the spool (42) and the plate (58) to the shaft (62); and
- a weak support position in which the at least one containment element (75) bears on the outer circumference of the spool (42) so as to allow the additional rotation of the plate (58) about the principal axis of rotation (R1) relative to the shaft (62) while containing the spool (42), radially, relative to the principal axis of rotation (R1).

15. The manufacturing installation (10) according to claim 14, wherein the containment means (70) further comprises a constraining apparatus (80) configured to radially constrain the at least one containment element (75) against the spool (42) in the direction of the principal axis of rotation (R1).

16. The manufacturing installation (10) according to claim 14 or 15 wherein the containment means (70) further comprises a complementary constraint apparatus (86) configured to radially constrain the spool (42) in the direction of the at least one containment element (75).

17. The manufacturing installation (10) according to claim 3, wherein the principal axis of rotation (R2) is substantially perpendicular to the spool axis (C-C') and passes through the center of the spool (242), the spool (242) being mounted in rotation about the spool axis (C-C') on the rotation mechanism (256).

18. The manufacturing installation (10) according to claim 17 when taken in combination with claim 9 or 10, wherein the feeding of the unwound manufacturing material wire (244) by the feed device (27) drives the additional rotation of the spool (242) about the spool axis (C-C') and the unwinding of the manufacturing material wire (244) from the spool (242).

19. The manufacturing installation (10) according to any one of claims 1 to 3 when taken in combination with claim 9 or 10, further comprising an auxiliary manufacturing system (421) configured to manufacture the manufactured object or to manufacture an auxiliary manufactured object by additive friction stir deposition from the manufacturing material,
the feed system (440) being further configured to feed the auxiliary manufacturing system (421) with manufacturing material, the feed system (440) further comprising an auxiliary spool (443) of a manufacturing material wire (445) wound about an auxiliary spool axis (E-E'),
the rotary unwinding device (450) being further configured to unwind the manufacturing material wire (445) from the auxiliary spool (443), the feed system (440) further comprising a device (531) for auxiliary guiding of the unwound manufacturing material wire (445) of the auxiliary spool (443) from the rotary unwinding device (450) to the auxiliary manufacturing system (421),
the auxiliary manufacturing system (421) comprising:
- an auxiliary stirring pin (427) intended for stirring the unwound manufacturing material wire (445) from the auxiliary spool (443) to manufacture the manufactured object or the auxiliary manufactured object; and
- an auxiliary feed device (429) for feeding the unwound manufacturing material wire (445) from the auxiliary spool (443), configured to displace the unwound manufacturing material wire (445) from the auxiliary spool (443) toward the auxiliary stirring pin (427);
the stirring pin (426) and the auxiliary stirring pin (427) being able to be arranged in a symmetrical manner relative to a plane of symmetry (S), so that the vectors of forces exerted respectively by the stirring pin (426) and by the auxiliary stirring pin (427) are of substantially equal norms but of opposite directions, and so that the manufacturing material of the spool (442) and the auxiliary manufacturing material of the auxiliary spool (443) are stirred and fed according to respective symmetrical trajectories.

20. A method (200) for manufacturing a manufactured object from a manufacturing material using a manufacturing installation (10) according to any one of the preceding claims, the method (200) comprising:
- a step (202) of feeding the manufacturing system (20) with manufacturing material by the feed system (40); and
- a step (204) of manufacturing the manufactured object by additive friction stir deposition from the manufacturing material by the manufacturing system (20);
the feed step (202) comprising a sub-step (202A) of unwinding the manufacturing material wire (44) from the spool (42) by the rotary unwinding device (50) and a sub-step (202B) of guiding the unwound manufacturing material wire (44) from the rotary unwinding device (50) to the manufacturing system (20) by the guiding device (130),
the unwinding sub-step (202A) further comprising:
- rotating the spool (42) about the principal axis of rotation (R1); and
- rotating the unwound manufacturing material wire (44) about its neutral fiber by the rotary unwinding device (50).
